# EUROPEAN PATENT APPLICATION

(11) **EP 4 794 073 A1**
(43) Date of publication of application: **19.08.2026**
(21) Application number: 25869593.1
(22) Date of filing: 18.03.2025
(51) Int. Cl.: H01M 50/167, H01M 50/186, H01M 50/30

(54) **BATTERY, BATTERY PACK, CASE AND CASE ASSEMBLY**

(30) Priority: 27.12.2024 CN 202411964180; 27.12.2024 CN 202423270352 U; 27.12.2024 CN 202423270236 U; 27.12.2024 CN 202423270257 U; 27.12.2024 CN 202423267378 U; 27.12.2024 CN 202423270201 U; 27.12.2024 CN 202423270023 U; 27.12.2024 CN 202423270296 U
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN); Eve Energy Co., Ltd., Huizhou, Guangdong 516006 (CN)
(72) Inventor: LIU, Rongwei, Huizhou, Guangdong 516039 (CN); LI, Renbing, Huizhou, Guangdong 516039 (CN); YAN, Bo, Huizhou, Guangdong 516039 (CN); XU, Yuebin, Huizhou, Guangdong 516039 (CN); HE, Wei, Huizhou, Guangdong 516039 (CN)
(74) Representative: Zhu, Puxing
(86) International application number: PCT/CN2025/083098
(87) International publication number: WO 2026/137616

(57) **Abstract**

A battery, a battery pack, a housing, and a housing assembly are provided. The battery includes a housing, a cover assembly and a first sealing element. A first opening is formed at one end of the housing, the cover assembly is connected to the housing and seals the first opening, the first sealing element is disposed between the cover assembly and the housing. The first sealing element wraps a side surface of the cover assembly and forms a sealed connection to the cover assembly and the housing, and a gap is formed between the first sealing element and the side surface of the cover assembly.

## Description

This application claims priority to Chinese Patent Application No. 202411964180.5, 202423270352.7, 202423270236.5, 202423270257.7, 202423267378.6, 202423270201.1, 202423270023.2, and 202423270296.7 filed on December 27, 2024, the entire contents of which are incorporated herein by reference.

### TECHNICAL FIELD

The present disclosure relates to the field of batteries, and more particularly, to a battery, a battery pack, a housing, and a housing assembly.

### BACKGROUND

With the development of battery technology, the requirements for the safety performance of batteries are increasingly high. The sealing of batteries is critical to their safety performance. Battery sealing primarily involves the sealing between the battery housing and the cover assembly. Welding sealing or buckling sealing is usually used in the related art. When the buckling sealing is used, a sealing element is provided between the housing and the cover assembly to achieve the sealing between the housing and the cover assembly by pressing the sealing element.

### SUMMARY

In the related art, when the buckling sealing is used, the cover assembly may be deformed and collapsed, resulting in poor structural stability of the battery as a whole.

The invention provides a battery. The battery includes:
A housing having a first opening formed at one end thereof;
A cover assembly connected to the housing and sealing the first opening; and
A first sealing element disposed between the cover assembly and the housing. The first sealing element wraps a side surface of the cover assembly and forms a sealed connection to the cover assembly and the housing. A gap is provided between the first sealing element and the side surface of the cover assembly.

The present disclosure provides a battery. The battery includes:
A housing;
A terminal assembly disposed in the housing;
A jelly roll disposed within the housing; and
A current collector disposed in the housing and including a protrusion and a plate body surrounding the protrusion. The protrusion protrudes from the plate body in an axial direction of the battery and is connected to the terminal assembly, and a side of the plate body remote from the terminal assembly is connected to the jelly roll.

In the axial direction of the battery, the height of the protrusion is M₁, and the thickness of the plate body is M₂, satisfying M₁≤2M₂.

The present disclosure provides a battery. The battery includes:
A housing:
A current collector disposed in the housing; and
A first insulating element connected between the current collector and the housing in the axial direction of the battery. A third groove is disposed in a side of the first insulating element facing the current collector.

The volume of the third groove is M₂₁, the maximum thickness of the first insulating element is M₂₂, and the bottom area of the first insulating element is M₂₃, satisfying M₂₁≥10%×M₂₂×M₂₃.

The present disclosure provides a battery. The battery includes:
A housing provided with an accommodating chamber;
A jelly roll disposed in the accommodating chamber; and
A current collector disposed in the accommodating chamber and welded to the jelly roll. The jelly roll includes an end surface facing the current collector, and a welding area formed between the end surface and the current collector occupies 10%-90% of an area of the end surface.

The present disclosure provides a battery pack. The battery pack includes the battery of any of the above.

The present disclosure provides a housing. The housing includes:
A main body portion; and
A support portion connected to the main body portion, recessed in a first direction toward the inside of the housing, and including two opposite side walls in a second direction, the second direction being perpendicular to the first direction. The housing satisfies the following conditions: 0<M9≤0.05*H, where E1 is the minimum distance between the two opposite side walls and H is the height of the cell.

The present disclosure provides a housing assembly. The housing assembly includes:
A housing having a first opening formed at one end thereof;
A cover assembly connected to the housing and sealing the first opening; and
A first sealing element disposed between the cover assembly and the housing. The first sealing element wraps a side surface of the cover assembly and forms a sealed connection to the cover assembly and the housing. The first sealing element includes a first sealing portion buckled between the housing and the opposite sides of the cover assembly, and a second sealing portion protruding from the housing, and the thickness T1 of the first sealing portion and the thickness T2 of the second sealing portion satisfy a relationship: 0.1≤T1/T2≤0.8.

The present disclosure provides a housing assembly. The housing assembly includes:
A housing for receiving a battery cell assembly; and
A cover assembly connected to one end of the housing. The cover assembly includes a first convex portion protruding in a direction remote from the housing, and a concave portion recessed in a direction close to the housing and abutted against the battery cell assembly. A first air chamber is formed by the first convex portion, the concave portion, the housing, and the battery cell assembly.

### BENEFICIAL EFFECT

The battery provided in the present disclosure includes a housing, a cover assembly and a first sealing element, where one end of the housing is formed with a first opening, the cover assembly is connected to the housing and seals the first opening, the first sealing element is disposed between the cover assembly and the housing. The first sealing element wraps a side surface of the cover assembly and forms a sealed connection to the cover assembly and the housing, and a gap is formed between the first sealing element and the side surface of the cover assembly. By leaving the gap between the first sealing element and the side surface of the cover assembly, it is possible to reduce the pressing of the first sealing element on the side surface of the cover assembly during the buckling of the cover assembly and the housing, thereby reducing the risk of deformation of the cover assembly and ensuring the overall structural stability and service performance of the battery.

The battery provided in the present disclosure includes a housing, a terminal assembly, a jelly roll, and a current collector, where the current collector includes a plate body and a protrusion protruding from the plate body and connected with the terminal assembly, so that the connection between the current collector and the terminal assembly can be ensured, the phenomenon of incomplete welding and splash welding during the welding process between the current collector and the terminal assembly can be prevented, and the connection area between the current collector and the terminal assembly can be ensured, so that effective welding between the current collector and the terminal assembly can be achieved, thereby meeting the overcurrent requirement of the battery. At the same time, by the provision of the protrusion, it is possible to avoid increasing the overall thickness of the plate body portion, and to avoid affecting the inner space of the battery housing to achieve effective welding between the current collector and the terminal assembly, thereby satisfying the overcurrent requirement of the battery. In addition, the parameter setting of the M1≤2M2 can ensure the contact between the protrusion and the terminal assembly, and also can prevent the height of the protrusion from being too high, thereby preventing the internal space of the battery housing from being affected.

The battery provided in the present disclosure includes a housing, a current collector, and a first insulating element, where the current collector is disposed in the housing. In the axial direction of the battery, a first insulating element is connected between the current collector and the housing, and a third groove is formed in one side of the first insulating element toward the current collector. The volume of the third groove is M₂₁, the maximum thickness of the first insulating element is M₂₂, and the area of the first insulating element is M₂₃, satisfying M₂₁≥10%×M₂₂×M₂₃. The third groove is provided so that the air chamber space can be reserved in the interior of the housing, the expansion space can be reserved in the interior of the housing for the jelly roll, thereby ensuring the use safety of the battery. At the same time, the internal pressure of the housing can be reduced, thereby ensuring the safety of use of the battery. In addition, a part of the interior space of the housing can be reserved without affecting the original volume of the housing, avoiding all the interior of the housing to be filled with entities, the safety of the battery is ensured, the overall weight of the battery is reduced, and the lightweight design requirement of the battery is met.

The battery provided in the present disclosure includes a jelly roll and a current collector. The welding area of the end surface of the jelly roll and the current collector is between 10%-90% of the area of the end surface. On the basis of the structure of the jelly roll, the effective welding area is ensured, so that the connection strength between the current collector and the jelly roll can be increased, and the structural connection stability can be improved.

The battery pack provided in the present disclosure employs the battery above. A gap is formed between the first sealing element and the side surface of the cover assembly, so that the pressing of the first sealing element against the side surface of the cover assembly can be reduced during the buckling of the cover assembly to the housing, thereby reducing the risk of deformation of the cover assembly, and ensuring overall structural stability and service performance of the battery.

The housing provided in the present disclosure includes a main body portion and a support portion connected to the main body portion, where the support portion is recessed toward the inside of the housing in a first direction and includes two side walls opposite in a second direction, and the second direction is perpendicular to the first direction. The housing satisfies the following condition: 0<M9≤0.05*H, where E1 is the minimum distance between the two side walls and H is the height of the battery cell. According to some embodiments of the present disclosure, the support portion in the housing can be deformed to increase the space inside the battery cell in the process of increasing the pressure inside the battery cell, so that the trigger timing of the explosion-proof valve can be effectively delayed when the pressure inside the battery cell is released, thereby preventing the explosion-proof valve from being prematurely crushed due to the excessive pressure at the instant.

The housing assembly provided in the present disclosure includes a housing, a cover assembly and a first sealing element, where one end of the housing is formed with a first opening, the cover assembly is connected to the housing and seals the first opening, the first sealing element is disposed between the cover assembly and the housing, and the first sealing element wraps a side surface of the cover assembly and is in seal connection to the cover assembly and the housing. The first sealing element includes a first sealing portion buckled between the housing and the opposite sides of the cover assembly, and a second sealing portion protruding from the housing, and the thickness T1 of the first sealing portion and the thickness T2 of the second sealing portion satisfy a relationship: 0.1≤T1/T2≤0.8. In the present disclosure, by setting the thickness T1 of the first sealing portion and the thickness T2 of the second sealing portion to 0.1≤T1/T2≤0.8, it is possible to ensure that the amount of compression of the first sealing element is controlled within a proper range, so that the first sealing element can function as a seal, and the risk of failure due to excessive compression can be reduced, thereby ensuring an effective seal between the housing and the cover assembly.

The housing assembly provided in the present disclosure includes a housing for placing a cell assembly and a cover assembly connected to one end of the housing, where the cover assembly includes a first convex portion protruding in a direction remote from the housing, and a concave portion recessed in a direction proximate to the housing and abutted against the battery cell assembly, and a first air chamber is formed by the first convex portion, the concave portion, the housing and the battery cell assembly. According to some embodiments of the present disclosure, the first air chamber is formed in the housing assembly, so that the first air chamber can store the gas generated by the battery cell assembly in the housing during the operation of the housing assembly, thereby improving the gas storage capacity of the housing assembly, contributing to improving the safety performance and the service life of the housing assembly.

### BRIEF DESCRIPTION OF THE DRAWINGS

FIG. 1 is a schematic view of a battery according to some embodiments of the present disclosure.
FIG. 2 is a schematic view of a first structure of a housing assembly according to some embodiments of the present disclosure.
FIG. 3 is a partial schematic view of a buckling region between a housing and a cover assembly according to some embodiments of the present disclosure.
FIG. 4 is a partial schematic view of a buckling region between a housing and a cover assembly according to some embodiments of the present disclosure.
FIG. 5 is a schematic view of a second structure of a housing assembly according to some embodiments of the present disclosure.
FIG. 6 is a schematic view of a cover assembly according to some embodiments of the present disclosure.
FIG. 7 is a schematic view of a pressure relief groove according to some embodiments of the present disclosure.
FIG. 8 is a schematic view of different types of a through-hole provided in a second convex portion according to some embodiments of the present disclosure.
FIG. 9 is a schematic view of a buckling structure between a third sealing element and a second convex portion according to some embodiments of the present disclosure.
FIG. 10 is a partial schematic view of a housing according to some embodiments of the present disclosure.
FIG. 11 is a schematic view of the main body portion of FIG. 10 according to some embodiments of the present disclosure.
FIG. 12 is an enlarged view of part A of FIG. 11 according to some embodiments of the present disclosure.
FIG. 13 is an enlarged view of part B of FIG. 11 according to some embodiments of the present disclosure.
FIG. 14 is a schematic view of a recessed platform according to some embodiments of the present disclosure.
FIG. 15 is a partial schematic view of a housing in which a support portion is not formed according to some embodiments of the present disclosure.
FIG. 16 is a schematic view of an end portion of a second constant-diameter segment according to some embodiments of the present disclosure.
FIG. 17 is a cross-sectional view of a battery coated with an insulating adhesive tape according to some embodiments of the present disclosure.
FIG. 18 is a top view of an insulating adhesive tape according to some embodiments of the present disclosure.
FIG. 19 is a cross-sectional view of a battery according to some embodiments of the present disclosure.
FIG. 20 is a cross-sectional view of a current collector according to some embodiments of the present disclosure.
FIG. 21 is a cross-sectional view of a battery according to some embodiments of the present disclosure.
FIG. 22 is a schematic view of a flow passage according to some embodiments of the present disclosure.
FIG. 23 is a perspective view of a battery according to some embodiments of the present disclosure.
FIG. 24 is a perspective view of a first insulating element according to some embodiments of the present disclosure.
FIG. 25 is a top view of a first insulating element according to some embodiments of the present disclosure.
FIG. 26 is a cross-sectional view of a first insulating element according to some embodiments of the present disclosure.
FIG. 27 is a partially enlarged view of part A in FIG. 24 according to some embodiments of the present disclosure.
FIG. 28 is a schematic view of a first structure of a current collector according to some embodiments of the present disclosure.
FIG. 29 is an enlarged schematic view of part A in FIG. 28 according to some embodiments of the present disclosure.
FIG. 30 is a schematic view of a second structure of a current collector according to some embodiments of the present disclosure.
FIG. 31 is a schematic view of a third structure of a current collector according to some embodiments of the present disclosure.
FIG. 32 is a schematic view of a fourth structure of a current collector according to some embodiments of the present disclosure.
FIG. 33 is a schematic view of a first structure of a terminal assembly according to some embodiments of the present disclosure.
FIG. 34 is a schematic view of parameters of a first structure of a terminal assembly according to some embodiments of the present disclosure.
FIG. 35 is a partially enlarged view of FIG. 34 according to some embodiments of the present disclosure.
FIG. 36 is a schematic view of a second structure of a terminal assembly according to some embodiments of the present disclosure.
FIG. 37 is a schematic view of a third structure of a terminal assembly according to some embodiments of the present disclosure.
FIG. 38 is a schematic view of a fourth structure of a terminal assembly according to some embodiments of the present disclosure.
FIG. 39 is a schematic view of a fifth structure of a terminal assembly according to some embodiments of the present disclosure.
FIG. 40 is a schematic view of a sixth structure of a terminal assembly according to some embodiments of the present disclosure.

### List of reference numerals:

1. Battery:
10. Housing assembly; 11. Housing; 111. Engagement portion: 1111. Clamping portion; 1112. Support portion; 112. Main body portion; 1121. Base portion; 1122. Curved portion; 1123. Holding portion; 1124. Recessed platform; 1125. Flared segment; 1126. First constant-diameter segment; 1127. Second constant-diameter segment; 113. First opening; 114. Second opening; 12. Cover assembly; 121. Pressure relief groove; 123. First convex portion; 124. Concave portion; 125. Second convex portion; 1251. Second through-hole; 126. Third sealing element; 1261. Transition portion; 13. First sealing element; 131. First sealing portion; 132. Second sealing portion; 133. Third sealing portion; 14. First air chamber; 15. Second air chamber;
20. Terminal assembly; 21. Post terminal; 211. First through-hole; 212. First groove; 213. First welding zone; 214. First connection portion; 2141. First rib; 215. Second connection portion; 216. Riveting portion; 217. Second groove; 22. Second insulating element; 221. First protective portion; 23. Third insulating element; 231. Second protective portion; 24. Second sealing element; 241. Abutment portion; 25. Pressing ring; 251. First support portion; 252. Second support portion; 253. Second rib
30. Battery cell assembly; 31. Positive current collector; 32. Negative current collector; 33. Jelly roll; 331. End surface; 332. Side surface; 34. Flow passage; 35. Current collector; 351. Protrusion; 352. Plate body; 353. Third through-hole; 36. Second welding zone; 360. Welding line; 361. Kinked portion; 3611. First connection segment; 3612. Second connection segment; 300. Central portion; 311. Connection element; 321. First gap; 322. second gap;
40. Insulating adhesive tape; 401. First region; 402. Second region;
50. First insulating element; 501. Third groove; 502. Inner ring reinforcing rib; 503. Outer ring reinforcing rib; 504. Connection reinforcing rib; 505. Transition slope; 506. Notch; 507. Fourth through-hole.

### DETAILED DESCRIPTION

In the description of the present disclosure, it is to be noted that unless otherwise clearly defined and limited, the terms "connected/coupled", "connection" and "fix" should be interpreted broadly. For example, the terms may refer to a fixed connection, a detachable connection, or an integral connection; the terms may also refer to a mechanical connection, or an electrical connection with each other; the terms may further refer to a direct connection, an indirect connection through an intermediating part, an internal communication between two elements, or interactive relationship between two elements. Those skilled in the art can understand the specific meanings of the above-mentioned terms in the present disclosure according to circumstances.

In the description of the present disclosure, it is to be noted that unless otherwise clearly defined and limited, a first feature "on" or "under" a second feature may mean that the first feature directly contacts the second feature, or that the first feature contacts the second feature via an additional feature therebetween instead of directly contacting the second feature. Moreover, the first feature "on", "above", and "over" the second feature may mean that the first feature is right over or obliquely upward over the second feature or mean that the first feature has a horizontal height higher than that of the second feature. The first feature "under", "below", and "beneath" the second feature may mean that the first feature is right beneath or obliquely downward beneath the second feature or mean that that horizontal height of the first feature is lower than that of the second feature.

In the description of the present disclosure, it should be understood that orientations or position relationships indicated by the terms such as "upper", "lower", "left", "right", "front", and "rear" are based on orientations or position relationships illustrated in the drawings. The terms are used to facilitate and simplify the description of the present disclosure, rather than indicate or imply that the devices or elements referred to herein are required to have specific orientations or be constructed or operated in the specific orientations. Accordingly, the terms should not be construed as limiting the present disclosure. In addition, the terms "first" and "second" are for illustrative purposes only and have no special meanings.

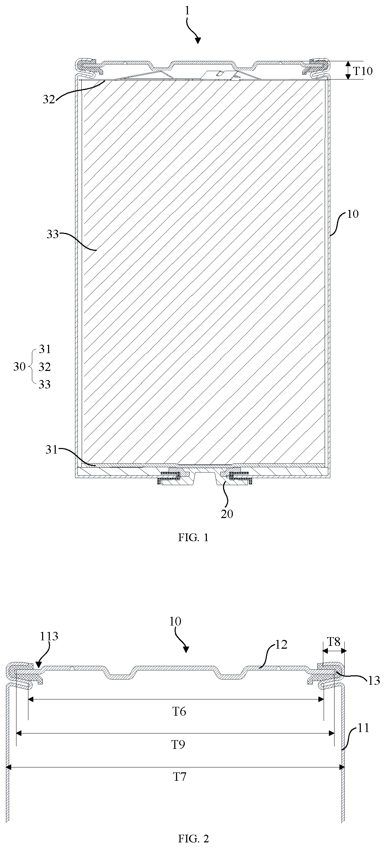

In some embodiments, the present disclosure provides a battery. As shown in FIGs. 1 and 2, the battery 1 includes a housing 11 having an accommodating chamber for accommodating a battery cell assembly 30. A first opening 113 is formed at one end of the housing 11 to facilitate assembly of the battery cell assembly 30 into the housing.

The battery 1 includes a cover assembly 12, which is connected to the housing 11 and seals the first opening 113 to achieve sealing protection of the battery cell assembly 30 placed in the housing 11, so as to avoid corrosion of the battery cell assembly 30 by the external environment, thereby ensuring the service performance of the battery 1.

The battery 1 includes a first sealing element 13 disposed between the cover assembly 12 and the housing 11. The first sealing element 13 wraps the side surface of the cover assembly 12 and forms a sealed connection to the cover assembly 12 and the housing 11. The first sealing element 13 is elastic, so that the first sealing element 13 can be pressed against the cover assembly 12 and the housing 11 when the cover assembly 12 is buckled to the housing 11, thereby achieving a sealed connection between the cover assembly 12 and the housing 11.

Here, a gap is disposed between the first sealing element 13 and the side surface of the cover assembly 12. That is, when the first sealing element 13 wraps the side surface of the cover assembly 12 for sealing, the first sealing element 13 is kept at a certain distance from the side surface of the cover assembly 12, so that the pressing of the first sealing element 13 against the side surface of the cover assembly 12 can be reduced during the buckling process of the cover assembly 12 with the housing 11, thereby effectively reducing the risk of deformation of the cover assembly 12.

In the embodiments of the present disclosure, the battery 1 includes the housing 11, the cover assembly 12 and the first sealing element 13, the first opening 113 is formed at one end of the housing 11, the cover assembly 12 is connected to the housing 11 and seals the first opening 113, the first sealing element 13 is provided between the cover assembly 12 and the housing 11 and wraps the side surface of the cover assembly 12 to seal the cover assembly 12 and the housing 11, and the gap is disposed between the first sealing element 13 and the side surface of the cover assembly 12. By leaving the gap between the first sealing element 13 and the side surface of the cover assembly 12, it is possible to reduce the pressing of the first sealing element 13 against the side surface of the cover assembly 12 during the buckling of the cover assembly 12 with the housing 11, thereby reducing the risk of deformation of the cover assembly 12 and ensuring the overall structural stability and service performance of the battery 1.

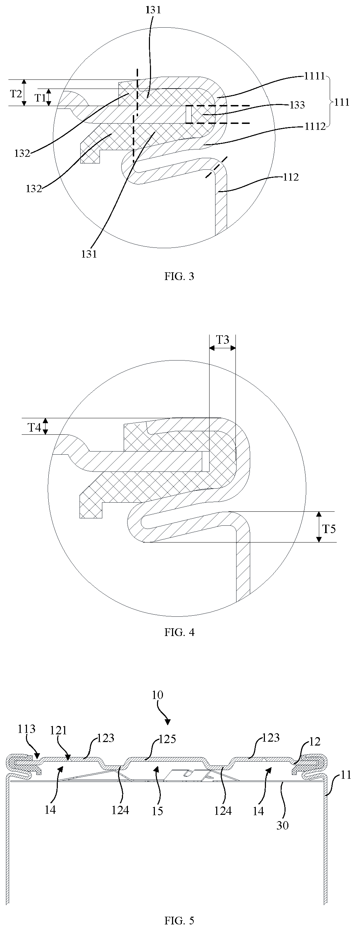

Alternatively, as shown in FIGs. 2 and 3, the housing 11 includes an engagement portion 111 for buckling to the cover assembly 12. The first sealing element 13 is disposed between the engagement portion 111 and the cover assembly 12. The first sealing element 13 protrudes from the engagement portion 111. That is, the first sealing element 13 protrudes from the edge of the engagement portion 111 when the housing 11 is buckled to the cover assembly 12 by the first sealing element 13, so as to ensure a sufficient contact area between the engagement portion 111 and the first sealing element 13, thereby improving the sealability between the housing 11 and the cover assembly 12.

The engagement portion 111 and the first sealing element 13 wrap the side surface of the cover assembly 12 and are buckled to the opposite sides of the cover assembly 12, and the first sealing element 13 protrudes from at least a portion of the engagement portion 111 close to the cover assembly 12. That is, the engagement portion 111 and the first sealing element 13 together wrap the upper and lower sides of the edge region of the cover assembly 12 so as to seal the housing 11 and the cover assembly 12. The first sealing element 13 protrudes from the engagement portion 111 on the upper side of the cover assembly 12, or from the engagement portion 111 on the lower side of the cover assembly 12, or from the engagement portion 111 on the upper and lower sides of the cover assembly 12, so as to provide a sufficient contact area between the engagement portion 111 and the first sealing element 13, thereby improving the sealability between the housing 11 and the cover assembly 12.

It is to be noted that the specific protruding manner of the first sealing element 13 with respect to the engagement portion 111 can be selectively adjusted according to actual design requirements, and is not particularly limited herein.

As shown in FIG. 3, the first sealing element 13 includes a first sealing portion 131 disposed between the housing 11 and the opposite sides of the cover assembly 12, and a second sealing portion 132 protruding from the housing 11. The thickness T1 of the first sealing portion 131 and the thickness T2 of the second sealing portion 132 satisfy the relationship: 0.1≤T1/T2≤0.8. That is, the first sealing portion 131 is a portion where the first sealing element 13 is compressed by pressing when the housing 11 is buckled to the cover assembly 12, and the second sealing portion 132 is a portion where the first sealing element 13 is not compressed. That is, the thickness of the second sealing portion 132 is the initial thickness of the first sealing element 13.

If the ratio of T1/T2 is too low, it indicates that the compression amount of the first sealing element 13 when it is pressed is too large, which may lead to failure of the first sealing element 13 due to excessive compression, thereby affecting the sealing effect of the housing 11 and the cover assembly 12, and even causing the side surface of the cover assembly 12 to expand too large, thereby causing the buckling regions of the cover assembly 12 and the housing 11 and the pressure relief groove structure provided on the cover assembly 12 to deform, thereby affecting the sealing effect. If the ratio of T1/T2 is too large, it indicates that the compression amount of the first sealing element 13 when it is pressed is insufficient, which may lead to insufficient fastening between the housing 11 and the first sealing element 13 and between the first sealing element 13 and the cover assembly, and may also affect the sealing effect between the housing 11 and the cover assembly 12.

When the thickness T1 of the first sealing portion 131 and the thickness T2 of the second sealing portion 132 are set to be 0.1≤T1/T2≤0.8 in the embodiments of the present disclosure, it is possible to ensure that the compression amount of the first sealing element 13 is controlled to be within a proper range, so that the first sealing element 13 can function as a seal and reduce the risk of failure due to excessive compression, thereby ensuring an effective seal between the housing 11 and the cover assembly 12.

In the actual manufacturing process, the ratio can be set to be 0.1, 0.2, 0.4, 0.6, 0.8, or the like, which can be selectively adjusted according to actual design requirements and is not particularly limited herein.

Alternatively, as shown in FIGs. 3 and 4, the first sealing element 13 further includes a third sealing portion 133 that is disposed between the housing 11 and the side surface of the cover assembly 12. A gap is disposed between the third sealing portion 133 and the side surface of the cover assembly 12. The thickness T3 of the third sealing portion 133 and the thickness T2 of the second sealing portion 132 satisfy the relationship: 1≤T3/T2≤1.5. That is, when the first sealing element 13 is buckled to the cover assembly 12 around the side surface of the cover assembly 12, a distance can be maintained between the first sealing element 13 and the side surface of the cover assembly 12, so that the first sealing element 13 is prevented from being pressed against the side surface of the cover assembly 12 when the first sealing element 13 is stressed and deformed, thereby preventing the cover assembly 12 from being deformed or collapsed during the sealing process, and ensuring the overall structural stability of the housing assembly 10.

When the first sealing portion 131 buckled to both opposite sides of the cover assembly 12 is compressed by pressing, the first compression portion is compressed toward the third sealing portion 133. The gap is disposed between the third sealing portion 133 and the side surface of the cover assembly 12, and the third sealing portion 133 may be expanded. If the expansion amount of the third first sealing element 13 is too large, it indicates that the compression amount of the first sealing portion 131 is too large, which may cause the overall sealing failure of the first sealing element 13, or may cause the first sealing element 13 to be pressed against the side surface of the cover assembly 12, thereby causing deformation of the cover assembly 12 and affecting the overall structural stability of the housing assembly 10.

By setting the thickness T3 of the third sealing portion 133 and the thickness T2 of the second sealing portion 132 to satisfy 1≤T3/T2≤1.5 in the embodiments of the present disclosure, it is possible to ensure that the expansion amount of the first sealing element 13 is controlled to be within a proper range, so that the first sealing element 13 can both function as a seal and reduce the risk of failure due to excessive expansion, thereby ensuring an effective seal between the housing 11 and the cover assembly 12.

In the actual manufacturing process, the ratio can be set to be 1, 1.1, 1.2, 1.3, 1.4, or 1.5, which can be selectively adjusted according to the actual design requirements and is not particularly limited herein.

As shown in FIG. 4, the housing 11 includes a clamping portion 1111 that is buckled to a side of the cover assembly 12 remote from the other end of the housing 11. A minimum value of a height difference T4 between the side of the clamping portion 1111 remote from the cover assembly 12 and the side of the cover assembly 12 remote from the other end of the housing 11 is less than or equal to 1 mm. That is, when the housing 11 is buckled to the cover assembly 12, the upper surface of the clamping portion 1111 protrudes from the upper surface of the cover assembly 12. If the clamping portion 1111 protrudes too much, the overall height of the housing assembly 10 is too high, which may affect the flatness of the surface of the housing assembly 10. In the present disclosure, by setting the height difference T4 to be less than or equal to 1 mm, it is possible to ensure an effective buckling of the housing 11 with the cover assembly 12 while avoiding a large influence caused by the overall height of the housing assembly 10.

The housing 11 further includes a main body portion 112, and a support portion 1112 buckled to a side of the cover assembly 12 remote from the other end of the housing 11. The support portion 1112 is connected to the main body portion 112. The absolute value of the height difference T5 between the lowest point of the support portion 1112 in the thickness direction of the cover assembly 12 and the connection point between the support portion 1112 and the main body portion 112 is less than or equal to 5 mm.

Here, when the lowest point of the support portion 1112 in the thickness direction of the cover assembly 12 is lower than the connection point between the support portion 1112 and the main body portion 112, the support portion 1112 is buckled toward the inside of the main body portion 112. If the height difference is too large, the battery cell assembly 30 placed in the main body portion 112 may be pressed by the support portion 1112. When the lowest point of the support portion 1112 in the thickness direction of the cover assembly 12 is higher than the connection point between the support portion 1112 and the main body portion 112, the support portion 1112 is buckled toward the upper portion of the main body portion 112. If the height difference is too high, the overall height of the housing assembly 10 may be too high, and the space utilization rate in the housing 11 may be low, thereby affecting the energy density of the battery 1.

In some embodiments, as shown in FIG. 3, the outer diameter T6 of the main body portion 112 and the inner diameter T7 of the support portion 1112 satisfy the relationship: 0.3mm≤T6-T7≤10mm. Here, the support portion 1112 has a bent structure and is provided with a rounded corner at the bent position. The inner diameter of the support portion 1112 refers to a corresponding inner diameter at the center of the rounded corner. If the difference between the outer diameter T6 of the main body portion 112 and the inner diameter T7 of the support portion 1112 is small, it indicates that the support portion 1112 is bent into the inside of the housing 11 more, and since the curved portion of the support portion 1112 is formed by rolling, it is possible to cause the support portion 1112 to be pulled apart. If the difference between the outer diameter T6 of the main body portion 112 and the inner diameter T7 of the support portion 1112 is large, it indicates that the support portion 1112 is less bent into the interior of the housing 11, and that the buckling effect of the support portion 1112 to the cover assembly 12 may be poor.

In the embodiments of the present disclosure, by setting the relationship between the outer diameter T6 of the main body portion 112 and the inner diameter T7 of the support portion 1112 as 0.3 mm ≤T6-T7≤ 10 mm, it is possible to avoid the fracture of the support portion 1112 and to ensure the sealing effect between the housing 11 and the cover assembly 12.

In the actual manufacturing process, the difference value can be set to be 0.3 mm, 1 mm, 2 mm, 5 mm, 8 mm, 10 mm, or the like, which is not particularly limited herein.

In other embodiments, the inner diameter of the clamping portion 1111 is less than or equal to the inner diameter of the support portion 1112 to ensure that the clamping portion 1111 has a sufficient buckling area with the upper surface of the cover assembly 12, thereby ensuring a sealing effect of the housing 11 with the cover assembly 12.

Here, the cover assembly 12 partially overlaps the orthographic projection of the clamping portion 1111 in the axial direction of the housing 11, and the width of the overlapped portion in the radial direction of the housing 11 is greater than or equal to 0.2 mm, that is, the buckling width of the upper surface of the cover assembly 12 with the first sealing element 13 and the clamping portion 1111 is greater than or equal to 0.2 mm, so as to ensure that the clamping portion 1111 has a sufficient sealing area with the cover assembly 12, thereby ensuring an effective sealing of the housing 11 with the cover assembly 12.

Accordingly, the portion against which the support portion 1112 abuts the first sealing element 13 partially overlaps the orthographic projection of the cover assembly 12 in the axial direction of the housing 11, and the width of the overlapped portion in the radial direction of the housing 11 is greater than or equal to 0.2 mm, that is, the buckling width of the lower surface of the cover assembly 12 with the first sealing element 13 and the support portion 1112 is greater than or equal to 0.2 mm, to ensure that the support portion 1112 has a sufficient sealing area with the cover assembly 12, thereby ensuring an effective sealing of the housing 11 with the cover assembly 12.

Further, as shown in FIG. 3, the width T8 of the clamping portion 1111 in the radial direction of the housing 11 and the diameter T9 of the cover assembly 12 satisfy the relationship: T8≥0.03T9. If the width of the clamping portion 1111 in the radial direction of the housing 11 is too low, the buckling area of the clamping portion 1111 and the cover assembly 12 is insufficient, thereby affecting the sealing effect of the housing 11 and the cover assembly 12.

In still other embodiments, the rounded corner is provided at the connection between the main body portion 112 and the support portion 1112. That is, when the support portion 1112 is bent toward the inside of the main body portion 112, the rounded corner processing is performed at the connection between the main body portion 112 and the support portion 1112, so as to prevent the support portion 1112 from being broken due to stress concentration during the bending process.

In this case, the diameter of the rounded corner is greater than or equal to the thickness of the main body portion 112 to ensure that the support portion 1112 has a sufficient bending curvature when bent toward the inside of the main body portion 112, thereby preventing the support portion 1112 from being broken due to stress concentration during bending.

It is to be noted that the cover assembly 12 is provided with one or more protrusions to increase the overall gas storage space of the housing assembly 10. When the housing 11 and the cover assembly 12 are buckled by the first sealing element 13, the distance between the edge of the clamping portion 1111 and the protrusions on the cover assembly 12 is greater than or equal to 0, and the distance between the first sealing element 13 and the protrusions on the cover assembly 12 is greater than or equal to 0, so that the provision of the protrusions on the cover assembly 12 does not affect the sealing effect of the housing 11 and the cover assembly 12.

In some embodiments, as shown in FIG. 5, the cover assembly 12 includes a first convex portion 123 protruding remote from the housing 11, and a concave portion 124 recessed proximate the housing 11. The concave portion 124 abuts against the battery cell assembly 30. A first air chamber 14 is formed by the first convex portion 123, the concave portion 124, the housing 11, and the battery cell assembly 30. When the cover assembly 12 is assembled with the housing 11, the concave portion 124 on the cover assembly 12 is directly brought into contact with the battery cell assembly 30, so as to achieve a charging design of the cover assembly 12, and the first gas chamber 14 is formed by the first convex portion 123, the concave portion 124, the housing 11 and the battery cell assembly 30 for storing gas generated during operation of the battery 1. That is, the arrangement of the first air chamber 14 can effectively improve the gas storage capacity of the housing assembly 10, thereby contributing to the improvement of the safety performance and the service life of the housing assembly 10, and further to the improvement of the safety and the service life of the battery 1.

In some embodiments, the first convex portion 123 and the concave portion 124 are of an annular shape, and the concave portion 124 is located in an area surrounded by the first convex portion 123. The first air chamber 14 is also of an annular shape. By arranging the first gas chamber 14 in an annular shape, the distribution of the gas stored in the first gas chamber 14 in the housing assembly 10 is made more uniform, so that the stress on the cover assembly 12 is made more uniform, thereby contributing to the stability of the housing assembly 10 during use.

The width of the concave portion 124 (the difference between the outer diameter and the inner diameter) is greater than or equal to 4 mm and less than or equal to 8 mm. If the width of the concave portion 124 is too low, the contact area of the concave portion 124 with the battery cell assembly 30 is excessive small, which is not conducive to the charging design of the cover assembly 12. If the width of the concave portion 124 is too large, the space of the air chamber in the housing assembly 10 is reduced, thereby affecting the gas storage capacity of the housing assembly 10.

In the actual manufacturing process, the width of the concave portion 124 can be set to be 4 mm, 5 mm, 6 mm, 7 mm, or 8 mm, which can be adjusted according to the actual design requirements and is not particularly limited herein.

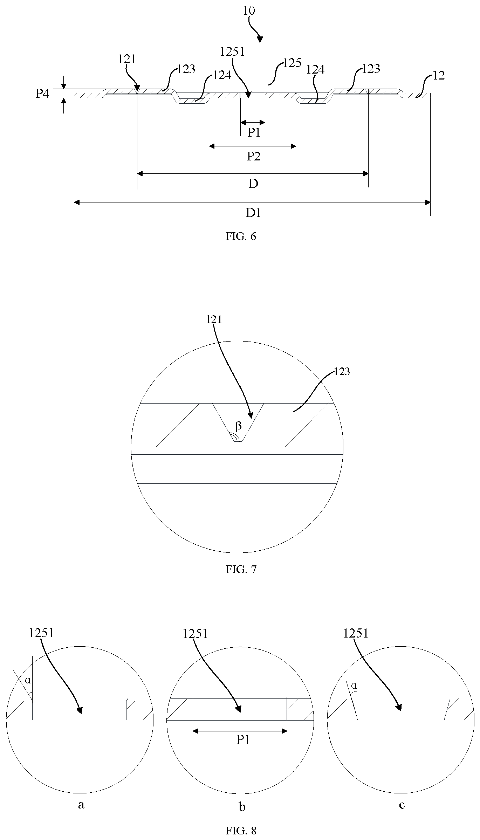

Further, as shown in FIG. 6, in the embodiments of the present disclosure, the height difference P4 between the side of the first convex portion 123 remote from the housing 11 and the side of the concave portion 124 remote from the housing 11 is set to be 0.5 mm≤P4≤2 mm. If the height difference is too low, the space of the first gas chamber 14 is less, which is not conducive to gas storage. If the height difference is too large, the space utilization rate inside the housing assembly 10 is low, and therefore the energy density of the battery 1 is poor.

In the actual manufacturing process, the height difference P4 can be set to be 0.5 mm, 1 mm, 1.5 mm, or 2 mm, which can be selectively adjusted according to the actual design requirements and is not particularly limited herein.

In some embodiments, as shown in FIG. 1, the battery cell assembly 30 includes a positive current collector 31, a negative current collector 32, and a jelly roll 33. The positive current collector 31 is disposed between the jelly roll 33 and a terminal assembly 20, and the negative current collector 32 is disposed between the jelly roll 33 and the cover assembly 12. The maximum value of the height difference T10 between a side of the cover assembly 12 remote from the terminal assembly 20 and the negative current collector 32 is greater than or equal to 1 mm. As a result, there is sufficient gas storage space between the cover assembly 12 and the negative current collector 32 to ensure that the housing assembly 10 has sufficient gas storage capacity to increase the overall service life of the battery 1.

In some embodiments, as shown in FIGs. 5 and 7, a pressure relief groove 121 is provided in the first convex portion 123. When the first convex portion 123 is provided in an annular shape, the pressure relief groove 121 extends in an annular shape in the circumferential direction of the first convex portion. Since the first air chamber 14 is correspondingly formed below the first convex portion 123, and the pressure relief groove 121 is provided in the first convex portion 123, the pressure relief can be performed through the pressure relief groove 121 in time when the gas pressure in the first air chamber 14 is large, thereby contributing to reducing the risk of explosion of the housing assembly 10 during use.

Here, the bottom of the pressure relief groove 121 is a position that is opened when the pressure is released. To ensure that the pressure relief groove 121 has a sufficient pressure relief area, the width of the bottom of the pressure relief groove 121 can be set to be greater than or equal to 0.02 mm and less than or equal to 0.8 mm. If the width of the bottom of the pressure relief groove 121 is too low, the pressure relief area will be insufficient, and the pressure required for the gas to break through the pressure relief groove 121 will be too large, thereby increasing the risk of explosion. If the width of the bottom of the pressure relief groove 121 is too large, the area of the weak region on the cover assembly 12 is too large, and the cover assembly 12 cannot withstand sufficient gas pressure, thereby reducing the overall safety performance and service life of the housing assembly 10.

In the actual manufacturing process, the width of the bottom of the pressure relief groove 121 can be set to be 0.02 mm, 0.05 mm, 0.1 mm, 0.3 mm, 0.5 mm, or 0.8 mm, which can be selectively adjusted according to the actual design requirements and is not particularly limited herein.

In other embodiments, as shown in FIG. 7, the included angle β between the side wall of the pressure relief groove 121 and the bottom of the pressure relief groove 121 satisfies the relationship: 95°≤β≤165°, which indicates that the side wall of the pressure relief groove 121 tends to expand so that the pressure relief groove 121 is opened during pressure relief. If the included angle is too large, the stamping area is too large, making molding difficult, and the strength of the cover assembly 12 is reduced, so that the cover assembly 12 cannot bear sufficient gas pressure, thereby reducing the overall safety performance and service life of the housing assembly 10. If the included angle is too low, the pressure required for the gas to break open the pressure relief groove 121 will be too large, thereby increasing the risk of explosion. In addition, if the included angle is too low, the pressure relief groove 121 will be deformed during the battery 1 manufacturing process, thereby reducing safety.

In the actual manufacturing process, the included angle can be set to be 95°, 110°, 125°, 150°, or 165°, which can be selectively adjusted according to actual design requirements and is not particularly limited herein.

Alternatively, as shown in FIG. 5, the cover assembly 12 further includes a second convex portion 125 protruding in a direction remote from the housing 11. The second convex portion 125 is disposed in an area enclosed by the concave portion 124. A second air chamber 15 is formed by the second convex portion 125, the concave portion 124, and the battery cell assembly 30. The second air chamber 15 is located in a position close to an intermediate area of the housing assembly 10, and the second air chamber 15 is also provided in an annular shape. By forming the second air chamber 15 in the housing assembly 10, the gas storage capacity of the housing assembly 10 can be effectively improved, thereby helping to improve the safety performance and the service life of the housing assembly 10, and thus the service life of the battery 1.

As shown in FIG. 6, the second convex portion 125 is provided with a second through-hole 1251 which extends through the second convex portion 125 in the thickness direction of the second convex portion 125. The second through-hole 1251 can be used as a liquid injection hole to facilitate the liquid injection operation in the manufacturing process of the battery 1. Alternatively, the second through-hole 1251 may be used as a venting hole to facilitate the venting of the gas generated during the formation of the battery 1, thereby contributing to the improvement of the storage capacity of the gas generated during the use of the battery 1, and to improve the safety during the use of the battery 1.

In some embodiments, the protrusion height of the second convex portion 125 is less than the protrusion height of the first convex portion 123. The second convex portion 125 is designed to sink with respect to the first convex portion 123, because the second through-hole 1251 is formed in the second convex portion 125, and the second through-hole 1251 is subsequently sealed. Therefore, when the second convex portion 125 is designed to sink, the height of the corresponding sealed position of the second through-hole 1251 is prevented from being higher than the height of the first convex portion, thereby avoiding the influence on the overall height of the housing assembly 10 and the flatness of the surface of the cover assembly 12.

The difference between the height of the second convex portion 125 and the height of the first convex portion 123 is greater than or equal to 0.3 mm and leas than or equal to 1 mm. If the difference between the heights of the second convex portion 125 and the first convex portion 123 is too large, the height of the second convex portion 125 may be too large to affect the overall height of the housing assembly 10, or the height of the first convex portion may be too low to disadvantageously affect the formation of the air chamber. If the difference between the height of the second convex portion 125 and the height of the first convex portion 123 is too low, the height at the sealing position is higher than the height of the first convex portion 123 after sealing the second through-hole 1251 in the second convex portion 125, thereby affecting the flatness of the surface of the cover assembly 12.

In the actual manufacturing process, the difference between the height of the second convex portion 125 and the height of the first convex portion 123 can be set to be 0.3 mm, 0.5 mm, 0.8 mm, or 1 mm, which can be selectively adjusted according to actual design requirements and is not particularly limited herein.

In other embodiments, as shown in FIG. 6, the diameter P1 of the second through-hole 1251 in the second convex portion 125 and the diameter P2 of the second convex portion 125 satisfy the relationship: 1mm<P1<0.8P2. If the diameter of the second through-hole 1251 is too low, the venting of the gas generated during the formation of the battery 1 is limited. If the diameter of the second through-hole 1251 is too large, the overall structural strength of the cover assembly 12 is affected, and the difficulty in sealing the second through-hole 1251 is also increased.

In still other embodiments, as shown in FIG. 8, the side wall of the second through-hole 1251 is at least partially inclined toward a direction remote from the axis of the second through-hole 1251 in the protrusion direction of the second convex portion 125, and the inclined angle α≤70°. That is, the side wall of the second through-hole 1251 is at least partially expanded in the protrusion direction of the second convex portion 125 so as to facilitate gas venting.

In the protrusion direction of the second convex portion 125, the second through-hole 1251 may include a straight tube section and an inclined section with an inclined angle α that are in communication with each other. The provision of the inclined section facilitates subsequent sealing operation of the second through-hole 1251. Alternatively, in the protrusion direction of the second convex portion 125, the side wall of the second through-hole 1251 is provided obliquely as a whole, that is, the second through-hole 1251 is an obliquely inclined hole with an inclined angle α. The specific structure of the second through-hole 1251 can be selectively adjusted according to actual design requirements and is not particularly limited herein.

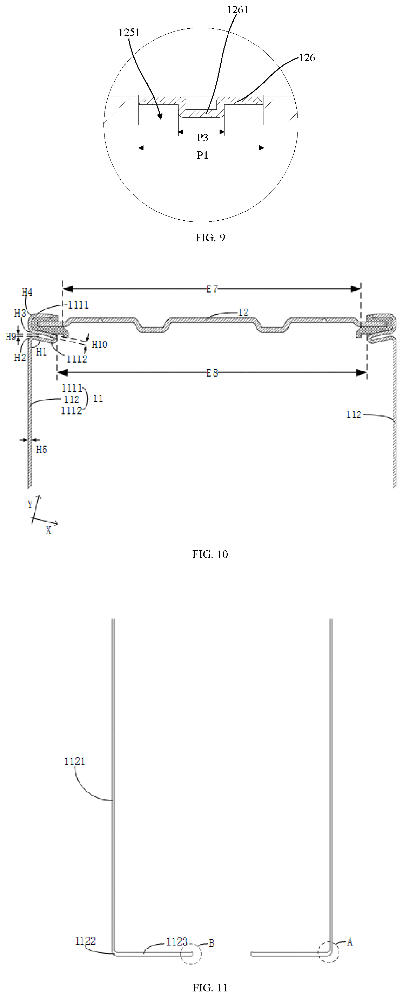

Alternatively, as shown in FIG. 9, the housing assembly 10 further includes a third sealing element 126 that is connected to the second convex portion and seals the second through-hole 1251. The third sealing element 126 includes a transition portion 1261 which is recessed in the direction close to the housing 11 and extends into the second through-hole 1251. That is, the third sealing element 126 has an U-like structure as a whole. Since the thickness of the third sealing element 126 itself is small, the provision of the transition portion 1261 on the third sealing element 126 facilitates the transition portion 1261 to be welded with the second convex portion 125 by placing the transition portion 1261 in the second through-hole 1251.

The diameter P3 of the transition portion 1261 and the diameter P1 of the second through-hole 1251 satisfy the relationship: 0.2P1≤P3≤P1. If the diameter of the transition portion 1261 is too large, the third sealing element 126 may not be assembled into the second through-hole 1251, so that the second through-hole 1251 cannot be welded and sealed. If the diameter of the transition portion 1261 is too low, the third sealing element 126 may not be easily inserted into the second through-hole 1251, thereby affecting the efficiency and quality of the welding seal.

In the actual manufacturing process, the specific value of the diameter of the transition portion 1261 can be designed and adjusted according to the diameter of the second through-hole 1251, which is not particularly limited herein.

It is to be noted that since the third sealing element 126 is installed in the second through-hole 1251 of the second convex portion 125, it is necessary to ensure that the lower surface of the transition section does not exceed the lower surface of the second convex portion 125 after assembly, so as to avoid interference between the third sealing element 126 and the battery cell assembly 30 located in the housing 11.

In some embodiments, when the second through-hole 1251 is a straight tube-like hole, the welding surface (side surface) of the third sealing element 126 can be chamfered. The chamfered welding surface is at an acute angle with the side of the third sealing element 126 facing the second through-hole 1251 (as shown in FIG. 9), so that the welding surface of the third sealing element 126 can be welded with the side wall of the second through-hole 1251 when sealing, thereby ensuring the sealing effect of the third sealing element 126.

It is to be noted that in order to ensure the welding effect of the third sealing element 126 and the side wall of the second through-hole 1251, the width of the chamfered welding surface of the third sealing element 126 in the radial direction of the second through-hole 1251 may be set to be greater than or equal to 0.2 mm, and the height of the chamfered welding surface thereof in the axial direction of the second through-hole 1251 may be set to be greater than or equal to 0.2 mm. The specific width and height values thereof can be selectively adjusted according to actual design requirements and are not particularly limited herein.

In other embodiments, when the second through-hole 1251 is composed of the inclined section and the straight tube section, the welding surface of the third sealing element 126 can be chamfered, and the inclined direction of the chamfered welding surface coincides with the inclined direction of the inclined section of the second through-hole 1251, so that the welding surface of the third sealing element 126 can be adhered to the side wall of the inclined section, thereby facilitating the welding of the third sealing element 126 to the side wall of the second through-hole 1251.

As shown in FIG. 6, the cover assembly 12 is provided with the pressure relief groove 121 that is of an annular shape, and the diameter D of the pressure relief groove 121 and the diameter D1 of the cover assembly 12 satisfy the relationship: 0.5D1<D<D1. By providing the pressure relief groove 121 on the cover assembly 12, when excessive gas is generated during the operation of the battery 1, the gas can rupture the cover assembly 12 through the pressure relief groove 121 to achieve pressure release, thereby reducing the risk of explosion caused by thermal runaway. By setting the relationship between the diameter D of the pressure relief groove 121 and the diameter D1 of the cover assembly 12 as 0.5D1<D<D1, it is possible to ensure that the pressure relief groove 121 has a sufficient pressure relief area, thereby ensuring safety in use of the battery 1.

It is to be noted that the opening pressure P of the pressure relief groove 121 satisfies P=4στ/D, where σ is the tensile strength of the material at the position where the pressure relief groove 121 is located, and τ is the thickness of the position where the pressure relief groove 121 is located. To ensure safe use of the battery 1, the opening pressure of the pressure relief groove 121 needs to meet 0.3Mpa<P<5Mpa, and the thickness of the position where the pressure relief groove 121 is located needs to meet 30 µm<τ<200 µm. If the opening pressure of the pressure relief groove 121 is insufficient or the thickness of the pressure relief groove 121 is too low, the service life of the battery 1 is too short. If the opening pressure of the pressure relief groove 121 is excessively high or the thickness of the pressure relief groove 121 is excessively high, the probability of a safety accident such as explosion of the battery 1 is increased.

In some embodiments, the battery 1 further includes a protective layer (not shown) disposed at least on the side of the cover assembly 12 facing the accommodating chamber. The protective layer has a thickness of greater than or equal to 0.5 microns and less than or equal to 10 microns. If the thickness of the protective layer is too low, it cannot effectively prevent corrosion. If the thickness of the protective layer is too large, the conductive design of the cover assembly 12 may be affected, and the overall height of the battery 1 may be increased. The thickness of the protective layer can be set to be 0.5 microns, 1 micron, 2 microns, 5 microns, 8 microns, 10 microns, or the like in the actual manufacturing process, and the specific value of the thickness can be selectively adjusted according to the design requirements, which is not particularly limited herein.

The protective layer can be provided only on the side of the cover assembly 12 facing the accommodating chamber to reduce the risk of corrosion of the cover assembly 12 by the electrolyte. Alternatively, the protective layer can be further disposed, in addition to on the side of the cover assembly 12 facing the accommodating chamber, on the side of the cover assembly 12 remote from the accommodating chamber to reduce the risk of corrosion of the cover assembly 12 by the external environment.

In other embodiments, the thickness of the protective layer at the location corresponding to the pressure relief groove 121 is less than the thickness of the protective layer corresponding to other locations to reduce the influence of the protective layer on the opening of the pressure relief groove 121 while ensuring that the protective layer protects the cover assembly 12.

In order to solve the problem in the related art that the explosion-proof valve is prematurely opened due to an excessive pressure applied to the explosion-proof valve in an instant, reference is made to FIG. 10, which is a schematic view of the housing 11 according to the embodiments of the present disclosure. The present embodiments provide the housing 11 for the battery 1. The housing 11 includes the main body portion 112 and the support portion 1112 connected to the main body portion 112, and the support portion 1112 is recessed toward the inside of the housing 11 in a first direction. Here, the first direction can be referred to the X direction in FIG. 10.

Specifically, when the battery 1 is in a thermal runaway state or the pressure inside the battery 1 is drastically increased due to other factors, the pressure inside the battery 1 may cause the support portion 1112 to deform toward the outside of the housing 11, so that the depth of the depression of the support portion 1112 gradually decreases. Since the deformation of the support portion 1112 is progressive, the deformation of the support portion 1112 causes the internal space of the battery 1 to gradually increase during the increase of the internal pressure of the battery 1 until the internal pressure of the battery 1 is insufficient to cause the deformation of the support portion 1112 or the deformation amount of the support portion 1112 to reach a maximum value. The internal pressure of the battery 1 can be gradually released during the increase of the internal space of the battery 1, thereby reducing the risk that the internal pressure of the battery 1 increases sharply in a short time.

This structural design can effectively retard the trigger timing of the explosion-proof valve, thereby increasing the service life of the battery 1. Further, when the deformation amount of the support portion 1112 reaches the maximum value, and the pressure inside the battery 1 continues to increase until the cover assembly 12 for sealing the battery 1 is punched and at least a part of the cover assembly 12 flies out of the inside of the battery 1, the support portion 1112 may be stretched by the influence of the cover assembly 12 in this process, so that the injection area of the internal substance in the case of thermal runaway of the battery 1 can be increased to increase the injection rate of the internal substance of the battery 1, thereby reducing the incidence of safety problems such as explosion, which may be caused by a relatively low injection rate when the battery 1 is in a thermal runaway state.

Referring to FIG. 10, the support portion 1112 includes two side walls opposite in a second direction, the second direction being perpendicular to the first direction, wherein the second direction refers to the Y direction in FIG. 10. In order to optimize the design of the housing 11 of the battery 1, in some embodiments, the housing 11 satisfies the following condition: 0<H9≤0.05*H, where H9 represents the minimum distance between the two side walls and H is the height of the battery 1. This design is designed to ensure that while the support portion 1112 is deformed to relieve the pressure inside the battery 1, the influence of the space occupation of the support portion 1112 on the overall capacity of the battery 1 is reduced.

Specifically, the minimum distance H9 between the two side walls of the support portion 1112 cannot be excessively large, so as to prevent the recess space of the support portion 1112 from being excessively large and thus to prevent the internal capacity of the battery 1 from being significantly reduced. Therefore, in order to balance the relationship between the deformation amount of the support portion 1112 and the internal capacity of the battery 1, the present embodiment sets the minimum distance between the two side walls to be not more than 5% of the height of the battery 1, and this design takes into account the actual requirements of the battery 1. It has been proved experimentally that, when the support portion 1112 satisfies this condition, it is possible to ensure that the support portion 1112 can provide an effective relief function when the internal pressure of the battery 1 is greatly increased, so that the internal capacity of the battery 1 is prevented from being significantly reduced due to the excessive spacing between the two side walls, thereby maintaining the operation performance and the durability of the battery.

In some embodiments, a chamfer is provided at the first connection between the support portion 1112 and the main body portion 112. The chamfer is provided as a rounded corner, in order to improve the molding quality of the support portion 1112. Specifically, the rounded corner design can effectively distribute stress during the depression molding process of the support portion 1112, thereby reducing the risk of damage to the support portion 1112 caused by stress concentration during forming and improving the overall structural stability and durability.

In order to increase the dispersion effect of stress, referring to FIG. 10, the housing 11 is designed to satisfy the following condition: H2≥1.5*H5, where H2 is the arc length of the chamfer at the first connection and H5 is the thickness of the main body portion 112. This structure is designed to optimize the connection region between the support portion 1112 and the main body portion 112, and to reduce the risk of material fatigue or crack generation due to stress concentration in the connection region during depression molding of the support portion 1112. According to the present embodiment, the arc length H2 of the chamfer at the first connection is set to be not less than 1.5 times the thickness H5 of the main body portion 112. The experiment proves that when the arc length H2 of the chamfer satisfies this condition, the support portion 1112 has high toughness in the forming process, and can effectively resist potential damage due to an external high-stress environment, especially in the process of thermoforming or compression forming, the housing 11 is less prone to cracking or deformation that is caused by stress concentration, thereby ensuring reliability of the housing 11.

Referring to FIG. 10, the housing 11 includes the main body portion 112 and the support portion 1112, but also the clamping portion 1111 connected to the support portion 1112 and buckling the cover assembly toward the support portion 1112. The clamping portion 1111 is configured to buckle the cover assembly to prevent the cover assembly from shaking or shifting. In order to reduce the risk of structural damage caused by stress concentration of the support portion 1112 during molding, in some embodiments, a chamfer is provided at the second connection between the support portion 1112 and the clamping portion 1111, and the chamfer is a rounded corner. In addition, the housing 11 satisfies the following condition: H3≥1.2*H5, where H3 is the arc length of the chamfer at the second connection, and H5 is the thickness of the main body portion 112. This structure is designed to optimize the connection region between the support portion 1112 and the clamping portion 1111, and to reduce the risk of material fatigue or cracking of the support portion 1112 due to stress concentration in the connection area during the depression molding.

According to the present embodiment, the arc length H3 of the chamfer at the second connection is set to be not less than 1.2 times the thickness H5 of the main body portion 112. The experiment proves that when the arc length H3 of the chamfer satisfies this condition, the support portion 1112 has high toughness during the molding process, and can effectively resist the potential damage that may occur in an external high-stress environment, particularly during thermoforming or compression molding, and the housing 11 is less prone to cracking or deformation that is caused by stress concentration, thereby ensuring reliability of the housing 11.

In some embodiments, referring to FIG. 10, the housing 11 satisfies the following condition: 20°≤H1≤90°, where H1 is the included angle between the support portion 1112 and the main body portion 112. Specifically, in this embodiment, the included angle between the support portion 1112 and the main body portion 112 is set to be not more than 90°. That is, the support portion 1112 is integrally bent downward with respect to the horizontal plane, thereby reducing the occupancy rate of the support portion 1112 in the height direction so as to provide a larger accommodating space in the inside of the battery 1. The included angle between the support portion 1112 and the main body portion 112 is set to be not less than 20°, so that the support portion 1112 can be effectively stretched when the internal pressure of the battery 1 is increased, thereby rapidly expanding the internal space of the battery 1 and providing cushioning for the pressure inside the battery 1.

In some embodiments, referring to FIG. 10, the housing 11 satisfies the following condition: H10≥0.5*H5, where H10 is the thickness of the support portion 1112 and H5 is the thickness of the main body portion 112. Specifically, although the thin support portion 1112 can reduce the overall weight of the battery 1, the structure is easily damaged during the molding process and when the outward deformation occurs, thereby affecting the safety of the battery 1. It is proved that when the thickness H10 of the support portion 1112 is set within this range, the support portion 1112 is less prone to being damaged during the molding and deformation toward the outside of the housing 11 by pressure, thereby ensuring the reliability of the housing 11.

In some embodiments, referring to FIG. 11, which is a schematic view of the main body portion in FIG. 10. The main body portion 112 includes a base portion 201, a curved portion 202, and a holding portion 203. The base portion 201 is connected to the holding portion 203 by the curved portion 202. Specifically, the base portion 201 and the holding portion 203 are formed in a continuous structure by the curved portion 202, so that the holding portion 203 can play a supporting role as the bottom wall of the housing 11.

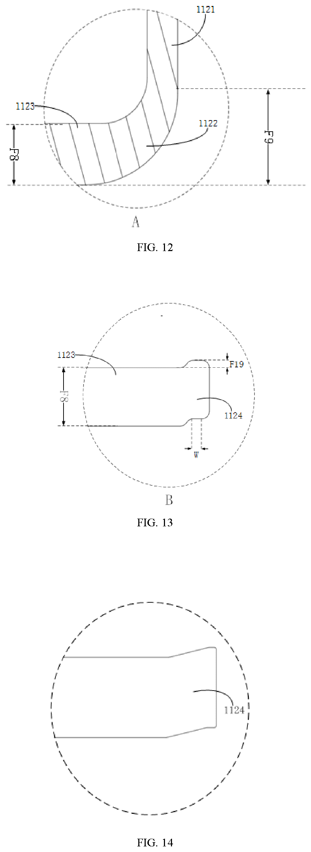

In some embodiments, referring to FIG. 12, which is an enlarged view of part A in FIG. 11, the thickness of the curved portion 202 is gradually increased in the extending direction thereof from one end of the curved portion 202 connected to the base portion 201 to the other end of the curved portion 202 connected to the holding portion 203, so that the main body portion 112 can effectively disperse stress during bending, thereby reducing the risk of damage thereof. In order to better disperse the stress, the housing 11 satisfies the following condition: F9≥0.8*F8, where F9 is the dimension of the outer rounded corner of the curved portion 202 in the height direction of the battery 1, and F8 is the thickness of the holding portion 203. Specifically, it has been experimentally verified that when F9 is less than 0.8*F8, the stress of the main body portion 112 is relatively concentrated during the bending process, and structural damage is easily caused.

In some embodiments, referring to FIGs. 11 and 13, a recessed platform 204 is provided at an end of the holding portion 203 remote from the curved portion 202. The recessed platform 204 is bent toward the inside of the battery 1 with respect to the holding portion 203, so that the sealing performance of the housing 11 can be enhanced. To ensure that the recessed platform 204 is less prone to being torn during manufacture, the housing 11 satisfies the following conditions: F19≤F8, where F8 is the thickness of the holding portion 203, and F19 is the depth of the recessed platform 204. It has been experimentally verified that when F19 is greater than F8, the holding portion 203 tends to be broken during the manufacturing process of the recessed platform 204.

In some embodiments, referring to FIG. 13, the housing assembly satisfies the following condition: W≥0.05 mm, where W is the width of the recessed platform 204. Specifically, in order to ensure the sealing performance of the recessed platform 204 to the battery 1, the width W of the recessed platform 204 is designed to be not less than 0.05 mm in the embodiments, and it is verified that the sealing performance of the recessed platform 204 is poor when the width W of the recessed platform 204 is less than 0.05 mm.

In some embodiments, referring to FIG. 13, to ensure that the recessed platform 204 is not susceptible to structural damage due to stress concentration during manufacture, the edges of the recessed platform 204 are rounded. In order to improve the effect of the support portion 1112 in dispersing stress during the manufacturing of the recessed platform 204, at least one bending point in the recessed platform 204 may be provided with two rounded corners, and the arcs of the two rounded corners face each other.

Further, in some embodiments, referring to FIG. 14, which is a schematic view of another recessed platform according to the present embodiments, the edges of the recessed platform 204 can be set to be an inverted C angle to manufacture the recessed platform 204.

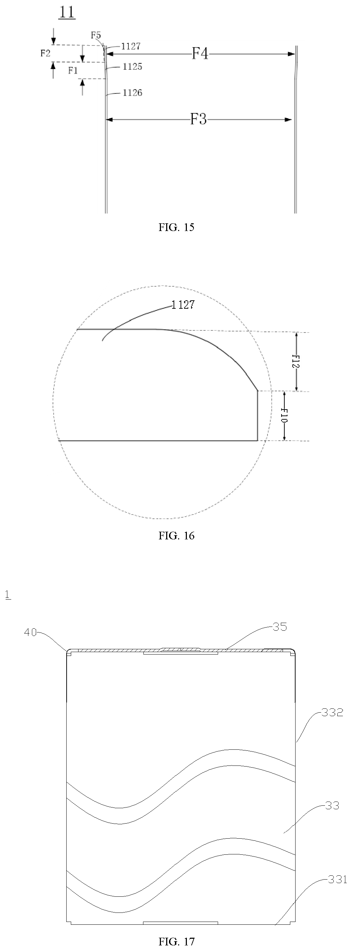

In some embodiments, referring to FIGs. 10 and 15, the housing 11 includes a flared segment 301 that is provided before being recessed and can be recessed to form the support portion 1112. The flared segment 301 exhibits a flared design with a gradually enlarged inner diameter in the direction from the main body portion 112 of the housing 11 toward the support portion 1112 of the housing 11. The flared design makes the open portion of the housing 11 more spacious, thereby reducing the risk of friction between the battery 1 and the wall surface of the housing during assembly due to the small opening of the housing in the conventional housing designs, enabling the battery 1 to more smoothly fit into the interior of the housing 11 during assembly.

In some embodiments, referring to FIG. 15, the housing 11 satisfies the following condition: F1≥1 mm, where F1 is a dimension of the flared segment 301 in the height direction of the battery 1. Specifically, by setting the dimension F1 of the flared segment 301 in the height direction of the battery 1 within this range, it aims to reduce the risk that the thickness of the support portion 1112 is too thin due to the low F1 when the flared segment 301 is recessed and stretched to form the support portion 1112, thereby ensuring the structural strength of the support portion 1112.

In some embodiments, referring to FIG. 15, the housing 11, prior to being recessed, further includes a first constant-diameter segment 302 connected to the flared segment 301. The first constant-diameter segment 302 is configured to form the main body portion 112 of the housing 11. The housing 11 satisfies the following condition: F5≤20°, where F5 is an included angle between the extension direction of the flared segment 301 and the extension direction of the first constant-diameter segment 302. Specifically, when the included angle F5 is set within this range, the difficulty in formation of the support portion 1112 can be effectively reduced. When the angle F5 is larger than 20°, it is proved experimentally that the support portion 1112 is not easily retracted during the molding process, so that it is difficult to mold the support portion 1112.

In some embodiments, the housing 11 includes the main body portion 112, the support portion 1112, and the clamping portion 1111, and the clamping portion 1111 is connected to the support portion 1112 and buckles the cover assembly toward the support portion 1112 to limit the cover assembly. The housing 11, prior to being recessed, includes the first constant-diameter segment 302, the flared segment 301, and a second constant-diameter segment 303 connected in sequence. The first constant-diameter segment 302 is configured to form the main body portion 112, the flared segment 301 is recessed to form the support portion 1112, and the second constant-diameter segment 303 is bent to form the clamping portion 1111.

In some embodiments, referring to FIG. 15, the housing 11 satisfies the following condition: F2≥1 mm, where F2 is the dimension of the second constant-diameter segment 303 in the height direction of the battery 1. Specifically, the second constant-diameter segment 303 is bent to form the clamping portion 1111. It is verified by experiments that when the dimension F2 of the second constant-diameter segment 303 in the height direction of the battery 1 is within the range, the clamping portion 1111 formed by bending the second constant-diameter segment 303 has a large orthographic projection dimension on the cover assembly body. In this case, the area of the cover assembly body buckled by the clamping portion 1111 is large, so that the cover assembly body can be sufficiently fixed by the clamping portion 1111 without being easily shaken or displaced.

In some embodiments, the diameter of the second constant-diameter segment 303 is greater than the diameter of the first constant-diameter segment 302. Specifically, in the present embodiments, the diameter of the second constant-diameter segment 303 is set to be larger than the diameter of the first constant-diameter segment 302, so that it is possible to prevent the battery 1 and the second constant-diameter segment 303 of the housing 11 from being scratched during the assembly process of the battery 1, thereby improving the assembly efficiency of the battery 1, and reducing damage to the surface of the battery 1 or the inside of the housing 11 that may be caused by friction.

In some embodiments, the housing 11 satisfies the following condition: F3/F4≥0.8, where F3 is the inner diameter of the first constant-diameter segment 302 and F4 is the inner diameter of the second constant-diameter segment 303. It is proved that when the ratio of the inner diameter F3 of the first constant-diameter segment 302 to the inner diameter F4 of the second constant-diameter segment 303 is not less than 0.8, the opening size of the housing 11 can provide sufficient allowance for the battery 1, so that the battery 1 can be inserted more smoothly, and the assembly process of the battery 1 is smooth.

In some embodiments, referring to FIG. 16, the end of the second constant-diameter segment 303 remote from the flared segment 301 is provided with a tangent surface, and the housing 11 satisfies the following condition: 30%≤F12/F10≤90%, where F12 is the dimension, in the thickness direction, of the orthographic projection of the tangent surface that is formed in the thickness direction of the second constant-diameter segment 303, and F10 is the thickness of the second constant-diameter segment 303. Specifically, it has been proved that when the ratio of F12 to F10 is less than 30%, the cutting surface cannot be covered by the nickel layer during the stamping process of the housing 11, and finally the corrosion resistance of the housing 11 is affected. When the ratio of F12 to F10 is greater than 90%, the shape of the end portion connected to the cutting surface is sharp, thereby causing the second constant-diameter segment 303 of the housing 11 to scratch other components easily during the assembly process.

In some embodiments, referring to FIG. 15, on the basis of F2≥1 mm, the housing 11 satisfies the following condition: F1/F2≥0.5, where F1 is the dimension of the flared segment 301 in the height direction of the battery 1, and F2 is the dimension of the second constant-diameter segment 303 in the height direction of the battery 1. Specifically, in the present embodiment, the ratio of the dimension F1 of the flared segment 301 in the height direction of the battery 1 to the dimension F2 of the second constant-diameter segment 303 in the height direction of the battery 1 is set within this range, so as to ensure that after the flared segment 301 is stretched to generate a depression to form the support portion 1112, the thickness of the support portion 1112 is relatively large without being easily damaged.

In order to ensure an anti-corrosion effect of the housing 11, the housing 11 may be subjected to a nickel plating treatment before or after being manufactured. In this case, when the housing 11 is subjected to nickel plating treatment before being manufactured, the surface of the support portion 1112 of the main body portion 112 is plated with a nickel layer having a thickness of 2 µH to 8 µH, and the surfaces of the base portion 201 and the curved portion 202 are plated with a nickel layer having a thickness of 1 µH to 5 µH. When the housing 11 is subjected to nickel plating treatment after being manufactured, the surface of the support portion 1112 of the main body portion 112 is plated with a nickel layer having a thickness of 0.1 µH to 5 µH, and the surfaces of the base portion 201 and the curved portion 202 are plated with a nickel layer having a thickness of 0.5 µH to 8 µH. It is proved that the corrosion resistance effect of the housing 11 is good when nickel plating is performed on the housing 11 in this manner.

The present disclosure also provides the housing 11 including the main body portion 112 and the support portion 1112 connected to the main body portion 112, the support portion 1112 is recessed in a first direction toward the inside of the housing 11 and includes opposite side walls in the second direction, and the second direction is perpendicular to the first direction. The housing 11 satisfies the following conditions: 0<H9≤0.05*H, where E1 is the minimum distance between the two side walls, and H is the height of the battery 1. The support portion 1112 in the housing 11 of the present disclosure can deform to increase the space inside the battery 1 when the pressure inside the battery 1 is increased, so that the trigger timing of the explosion-proof valve can be effectively retarded when the pressure inside the battery 1 is released, thereby preventing the explosion-proof valve from being prematurely crushed due to the excessive pressure applied to the explosion-proof valve in an instant.

In some embodiments, referring to FIG. 10, the housing assembly satisfies the following condition: 0.1 mm≤E7-E8≤5 mm, where E7 is the inner diameter of the contact surface between the first sealing element and the cover assembly, and E8 is the inner diameter of the orthographic projection of the support portion 1112 of the housing 11 on the cover assembly. Specifically, it has been verified that when the difference between the inner diameter E8 of the orthographic projection of the support portion 1112 of the housing 11 on the cover assembly and the inner diameter E7 of the contact surface between the first sealing element and the cover assembly is greater than 5 mm, the cover assembly is inconvenient to position during the assembly process due to the large size of the contact portion between the first sealing element and the cover assembly, thereby causing the cover assembly to be easily offset. When the difference between the inner diameter E8 of the orthographic projection of the support portion 1112 on the cover assembly and the inner diameter E7 of the contact surface between the first sealing element and the cover assembly is less than 0.1 mm, the cover assembly is inconvenient to assemble because the size of the contact portion between the first sealing element and the cover assembly is low.

In some embodiments, as shown in FIG. 17, the battery 1 includes the battery cell assembly 30 located within the housing 11 and an insulating adhesive tape 40 disposed between a side surface of the battery cell assembly 30 and a side wall of the housing 11. The insulating adhesive tape 40 is used to insulate the side wall of the housing 11 from at least part of the battery cell assembly 30, so as to meet insulation design requirements between at least part of the battery cell assembly 30 and the side wall of the housing 11.

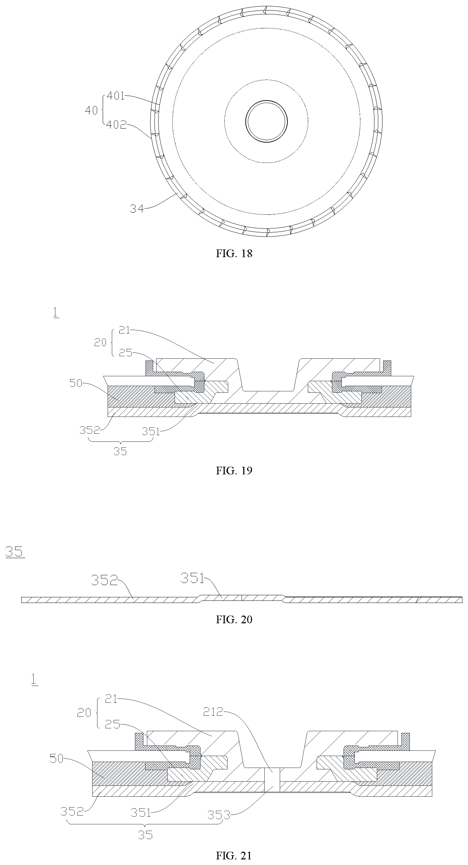

In this case, as shown in FIG. 18, a folded zone is formed from the insulating adhesive tape 40 close to the side of the battery cell assembly 30 facing an end of the housing 11. That is, when the insulating adhesive tape 40 is provided on the side surface of the battery cell assembly 30, in order to ensure the setting stability of the insulating adhesive tape 40 on the side surface of the battery cell assembly 30, the insulating adhesive tape 40 can be partially folded to the side of the battery cell assembly 30 facing the end of the housing 11, and after being folded, the folded insulating adhesive tape 40 needs to be flattened. At this time, the folded zone is formed from the insulating adhesive tape 40 close to the side of the battery cell assembly 30 facing the end of the housing 11. The provision of the folded zone can form an electrolyte flow passage so that the electrolyte can flow to the battery cell assembly 30 in the folded zone, thereby contributing to the improvement of the wetting effect of the battery cell assembly 30 and the overall service performance of the battery 1.

In some embodiments, as shown in FIGs. 18 and 19, the battery 1 includes the terminal assembly 20 that is connected to and electrically insulated from an end of the housing 11 remote from the cover assembly 12. The battery cell assembly 30 includes the positive current collector 31 (current collector 35) and the negative current collector 32 (current collector 35) electrically connected to the terminal assembly 20, i.e., the terminal assembly 20 and the housing 11 serve as two electrodes of the battery 1, respectively, and the positive current collector 31 and the terminal assembly 20 are the same electrode of the battery 1.

The insulating adhesive tape 40 is disposed between the side surface of the positive current collector 31 and the side wall of the housing 11 so that the positive current collector 31 is insulated from the side wall of the housing 11, and the folded zone is formed from the insulating adhesive tape 40 close to the side of the positive current collector 31 facing the terminal assembly 20, so that the electrolyte can flow in the folded zone to the jelly roll 33 connected to the positive current collector 31, thereby contributing to improving the wetting effect of the jelly roll 33, thereby improving the overall service performance of the battery 1.

Alternatively, a plurality of folded zones are formed from the insulating adhesive tape 40 close to the side of the positive current collector 31 facing the terminal assembly 20. The plurality of folded zones are provided at equal intervals in the circumferential direction of the positive current collector 31, so that the electrolyte can flow uniformly in the plurality of folded zones in the circumferential direction of the positive current collector 31, thereby contributing to improving the wetting uniformity of the jelly roll 33, thereby improving the overall service performance of the battery 1.

Referring to FIGs. 17 to 20, the present disclosure provides a battery including the housing 11, the terminal assembly 20, the jelly roll 33, the current collector 35, and the insulating adhesive tape 40. The terminal assembly 20 is provided in the housing. The jelly roll 33 is provided in the housing. The current collector 35 is provided in the housing and includes a protrusion 351 and a plate body 352 disposed around the protrusion 351. The protrusion 351 protrudes from the plate body 352 in the axial direction of the battery 1 and is connected to the terminal assembly 20. A side of the plate body 352 remote from the terminal assembly 20 is connected to the jelly roll 33. In the axial direction of the battery 1, the height of the protrusion 351 is M1, and the thickness of the plate body 352 is M2, where M1≤2M2.

In the embodiments of the present disclosure, the current collector 35 includes the plate body 352 and the protrusion 351 protruding from the plate body 352, and is connected to the terminal assembly 20 by the protrusion 351, so that the connection between the current collector 35 and the terminal assembly 20 can be ensured, the phenomenon of incomplete welding and splash welding during the welding process between the current collector 35 and the terminal assembly 20 can be prevented, and the connection area between the current collector 35 and the terminal assembly 20 can be ensured, thereby achieving effective welding between the current collector 35 and the terminal assembly 20, and meeting the overcurrent requirement of the battery 1. Meanwhile, by the arrangement of the protrusion 351, the overall thickness of the portion of the plate body 352 is not increased, avoiding the internal space of the housing of the battery 1, achieving an effective welding between the current collector 35 and the terminal assembly 20, thereby satisfying the overcurrent requirement of the battery 1. In addition, the parameter setting of the M1<2M2 makes it possible to ensure the contact of the protrusion 351 with the terminal assembly 20, and to prevent the height of the protrusion 351 from being too high, thereby preventing the internal space of the battery 1 from being affected.

In some embodiments, as shown in FIG. 17, to ensure insulation between the outer peripheral surface of the current collector 35 and the inner side wall of the housing, the insulating adhesive tape 40 is provided for insulation between the housing 352 and the inner side wall of the housing.

In some embodiments, the insulating adhesive tape 40 has a thickness of M3, M3≤M1≤2(M2+M3). As a result, the height of the protrusion 351 can also protrude from the surface of the insulating adhesive tape 40 after the insulating adhesive tape 40 is attached to the current collector 35, thereby ensuring the connection between the protrusion 351 and the terminal assembly 20.

In the present embodiments, as shown in FIG. 20, the protrusion 351 is located in the middle of the plate body 352 and is connected to the terminal assembly 20 through the middle position, so that the connection between the protrusion 351 of the current collector 35 and the terminal assembly 20 can be better ensured, and effective welding between the protrusion 351 and the terminal assembly 20 can be achieved, thereby ensuring that the connection between the current collector 35 and the terminal assembly 20 can meet the overcurrent requirement of the battery 1, and ensuring normal use of the battery 1.

In some embodiments, referring to FIG. 21, a third through-hole 353 is disposed in the protrusion 351. A first groove 212 is disposed in the terminal assembly 20. The third through-hole 353 is disposed opposite and in communication with the first groove 212. By providing the third through-hole 353 and the first groove 212, it is possible to facilitate the liquid injection process of the electrolyte and ensure that the electrolyte can smoothly flow into the inside of the battery 1. Meanwhile, the third through-hole 353 and the first groove 212 are arranged oppositely, so that the accuracy of the electrolyte injection process can be ensured, the electrolyte can smoothly flow into the inside of the battery 1, and the use effect of the battery 1 can be ensured.

In some embodiments, the diameter of the third through-hole 353 is M4 and the diameter of the first groove 212 is M5, where M4≥M5. That is, the diameter of the third through-hole 353 provided in the current collector 35 is not less than that of the first groove 212 provided in the terminal assembly 20. After the assembly of the battery 1 is completed, in the axial direction of the battery 1, the terminal assembly 20 is disposed in the housing near the opening side of the housing, and the current collector 35 is disposed in the housing remote from the opening side of the housing. Therefore, the diameter of the third through-hole 353 remote from the opening side is not less than the first groove 212 near the opening side, so that the electrolyte can smoothly flow into the jelly roll 33 to sufficiently infiltrate the jelly roll 33, thereby avoiding leakage of the electrolyte, and ensuring normal use requirements of the battery 1.

In some embodiments, the terminal assembly 20 includes a pressing ring 25 and a post terminal 21 connected to the protrusion 351, the pressing ring 25 is provided on the periphery of the post terminal 21, and the first groove 212 is provided in the post terminal 21.

It is to be noted that, as shown in FIG. 19, in the present embodiments, the pressing ring 25 is provided on the side of the post terminal 21 close to the current collector 35 for pressing the post terminal 21 to the surface of the protrusion, thereby ensuring that the post terminal 21 can be sufficiently contacted with the protrusion, ensuring the connection between the post terminal 21 and the protrusion, and avoiding the occurrence of splash welding or incomplete welding between the current collector 35 and the terminal assembly 20.

In some embodiments, the protrusion 351 has a maximum outer diameter of M6, the first groove 212 has an inner diameter of M7 at a side near the current collector 35, and the pressing ring 25 has a maximum outer diameter of M8, where M8≥M6≥M7. Accordingly, the maximum outer diameter of the protrusion 351 is larger than the inner diameter of the first groove 212, so that the contact area between the current collector 35 and the terminal assembly 20 can be ensured, thereby ensuring the connection between the current collector 35 and the terminal assembly 20. At the same time, the maximum outer diameter of the protrusion 351 does not exceed the maximum outer diameter of the pressing ring 25, so that more air chamber space is reserved in the housing, thereby reducing the pressure inside the housing.

In some embodiments, the plate body 352 has a diameter of M9 and the jelly roll 33 has a maximum outer diameter of M10, where M9≤M10. As a result, the assembly of the current collector 35 and the jelly roll 33 can be facilitated by the setting of this parameter, and the service performance of the jelly roll 33 can be ensured, avoiding the jelly roll 33 being unable to meet the overcurrent requirement of the battery 1 due to an excessively small size of the jelly roll 33, thereby ensuring the normal use of the battery 1.

In some embodiments, the plate body 352 has a surface area of M11 and the end surface 331 of the jelly roll 33 in the radial direction has an area of M12, where M11>70%M12. As a result, the assembly of the current collector 35 and the jelly roll 33 can be facilitated by the setting of this parameter, and the service performance of the jelly roll 33 can be ensured, avoiding the jelly roll 33 being unable to meet the overcurrent requirement of the battery 1 due to an excessively small connection area of the jelly roll 33, thereby ensuring the normal use of the battery 1.

In some embodiments, the thickness M2 of the plate body 352 is set between 0.2 mm to 2 mm. By setting this parameter, the thickness of the plate body 352 can be made moderate, interference with the original internal space of the battery 1 can be avoided, the requirements of the assembly space for the cell of the battery 1 can be met, and the forming process of the plate body 352 can be facilitated.

In some embodiments, to avoid short circuit between the current collector 35 and the inside side wall of the housing, the jelly roll 33 includes two oppositely disposed end surfaces 331 and a side surface 332 connecting the two end surfaces 331. One end of the insulating adhesive tape 40 is attached to the side surface 332 of the jelly roll 33, and the other end of the insulating adhesive tape 40 is attached to the side of the plate body 352 remote from the jelly roll 33.

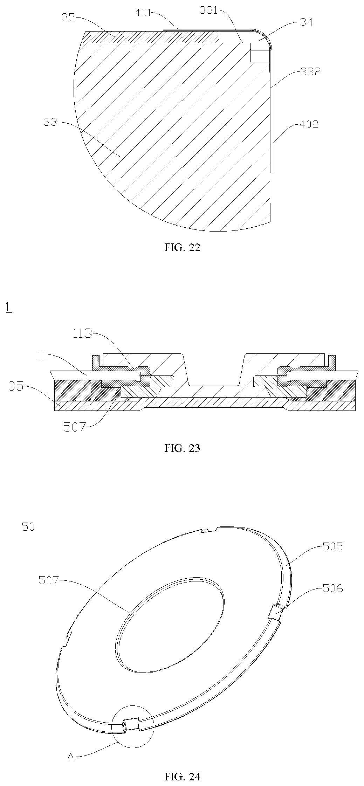

In some embodiments, as shown in FIG. 22, the insulating adhesive tape 40 located in the transition region between the jelly roll 33 and the plate body 352 forms a flow passage 34 to allow the electrolyte to pass. In a specific assembling process, the insulating adhesive tape 40 is subjected to a flattening process, and a gap is formed in the transition region between the jelly roll 33 and the plate body 352. In this region, the insulating adhesive tape 40 does not have a perfect sealing effect, and therefore, the flow passage 34 for the electrolyte can be formed, so that the electrolyte flows to this region. Thus, when the electrolyte permeates out, the region can become an effective communication channel, facilitating the flow process of the electrolyte between the positive electrode and the negative electrode of the battery 1, and ensuring the electrical performance of the jelly roll 33. At the same time, the electrolyte outside the jelly roll 33 can be conveniently flowed back into the jelly roll 33 from the passage, thereby ensuring that the battery 1 smoothly achieves a charging/discharging process and ensuring normal use of the battery 1.

It will be appreciated that since the diameter of the current collector 35 is less than the diameter of the jelly roll 33, a step can be formed in the transition region between the current collector 35 and the jelly roll 33. When the insulating adhesive tape 40 is attached to this region, the insulating adhesive tape 40 cannot fit perfectly and has no perfect sealing effect, thereby forming an effective communication channel for the electrolyte.

In some embodiments, the width of the flow passage 34 in the radial direction of the jelly roll 33 is M₁₃, where M₁₃≤40%M10. In the present embodiments, the width M₁₃ of the flow passage 34 corresponds to the single-side width. Therefore, it is possible to prevent the width of the flow passage 34 from being too large, to avoid a large difference in diameter between the jelly roll 33 and the plate body 352, and to avoid the inability of the adhesive tape to evenly adhere to both the plate body 352 and the jelly roll 33, thereby ensuring that the insulating adhesive tape 40 can be firmly attached to the jelly roll 33 and the plate body 352, and achieving the insulating effect of the insulating adhesive tape 40.

In some embodiments, the height of the jelly roll 33 is M14 and the height of the insulating adhesive tape 40 applied to the side surface 332 of the jelly roll 33 in the axial direction of the jelly roll 33 is M15, where M14>M15>3mm. In the present embodiments, the length of the insulating adhesive tape 40 applied to the side surface 332 of the jelly roll 33 is more than 3 mm, but completely covers the entire side surface 332 of the jelly roll 33, so that it is possible to ensure that the insulating adhesive tape 40 can be firmly applied to the side surface 332 of the jelly roll 33, and the height of the insulating adhesive tape 40 applied to the jelly roll 33 is not too large, thereby avoiding waste of the insulating adhesive tape 40.

In addition, the insulating adhesive tape 40 does not cover the entire side surface 332 of the jelly roll 33, and it is also possible to prevent the insulating adhesive tape 40 from occupying an excessive internal space in the housing, thereby avoiding lowering the air chamber space in the housing, and reducing the pressure inside the housing.

In some embodiments, the insulating adhesive tape 40 is arranged in the circumferential direction of the jelly roll 33, and the two ends of the insulating adhesive tape 40 form an overlapped area after the insulating adhesive tape 40 surrounds the circumferential surface of the jelly roll 33. In a specific gluing process, the insulating adhesive tape 40 needs to be attached to the entire circumferential surfaces of the current collector 35 and the jelly roll 33, and the overlapped area is formed by the two ends of the insulating adhesive tape 40, avoiding the insufficient adhesion on the outer circumference of the current collector 35 or the jelly roll 33, and the overlapped area formed by the two ends of the insulating adhesive tape 40 allows the connection stability of the insulating adhesive tape 40, avoiding the detachment of the adhesive tape, and ensuring the insulating effect of the insulating adhesive tape 40.

In some embodiments, the width of the overlapped area in the circumferential direction of the jelly roll 33 is M16, where 20%M9>M16>1mm.

In some embodiments, in the radial direction of the plate body 352, the width of the insulating adhesive tape 40 applied to the plate body 352 is M16, where 20%M9>M16>1.5mm. In the present embodiments, the width M16 of the insulating adhesive tape 40 applied to the plate body 352 corresponds to the single-side width. The width of the insulating adhesive tape 40 applied to the side of the plate body 352 remote from the jelly roll 33 is larger than 1.5 mm, but not more than 20% of the diameter of the entire plate body 352, so that the insulating adhesive tape 40 can be firmly attached to the side of the current collector 35 remote from the jelly roll 33, and the width of the insulating adhesive tape 40 applied to the plate body 352 is not too large, thereby preventing the working performance of the plate body 352 from being affected and avoiding waste of the insulating adhesive tape 40.

In addition, the insulating adhesive tape 40 does not cover the entire plate body 352. In this case, it is also possible to prevent the insulating adhesive tape 40 from occupying excessive internal space inside the housing, thereby preventing the air chamber space inside the housing from being reduced and reducing the pressure inside the housing.

In some embodiments, referring to FIG. 18, the insulating adhesive tape 40 includes a first region 401 attached to a side of the plate body 352 remote from the jelly roll 33 and a second region 402 attached to the side surface 332 of the jelly roll 33. The first region 401 has a maximum diameter of M16 and the second region 402 has a maximum diameter of M17, where 50%M17≤M16≤95%M17. With this arrangement, it is possible to prevent the width of the flow passage 34 from being too large, thereby ensuring that the insulating adhesive tape 40 can be smoothly attached to the jelly roll 33 and the current collector 35 after a flattening process, thereby ensuring the insulating effect of the insulating adhesive tape 40.

In some embodiments, the distance between the bottom surface of the insulating adhesive tape 40 remote from the plate body 352 and the bottom surface of the second region 402 is M17, and the distance between the bottom surface of the insulating adhesive tape 40 remote from the plate body 352 and the bottom surface of the side of the jelly roll 33 remote from the plate body 352 is M18, where 1%M18≤M17≤60%M18. In the present embodiments, it is no need to provide the insulating adhesive tape 40 on the entire side surface 332 of the jelly roll 33, avoiding waste of the insulating adhesive tape 40, and preventing excessive occupation of the internal space of the housing, thereby preventing the air chamber space in the housing from being lowered due to the application of the insulating adhesive tape 40, and ensuring safety in use of the battery 1.

In some embodiments, the battery further includes a first insulating element 50 disposed on a side of the plate body 352 remote from the jelly roll 33 for effecting insulation between the plate body 352 and the housing. By the arrangement of the first insulating element 50, it is possible to ensure insulation between the surface of the current collector 35 and the housing, and to cooperate with the insulating adhesive tape 40, thereby reducing the risk of short circuit between each part of the current collector 35 and the housing, and ensuring normal use of the battery 1.

In some embodiments, referring to FIGs. 19 and 21, the diameter of the first insulating element 50 is M19, and the thickness of the second region 402 of the insulating adhesive tape 40 in the radial direction of the jelly roll 33 is M20, where M19>M10+2M20. That is, in the present embodiment, the diameter of the first insulating element 50 is larger than the overall diameter of the jelly roll 33 after being glued, so that the overall insulating performance of the first insulating element 50 can be ensured, thereby ensuring the insulating effect of the first insulating element 50.

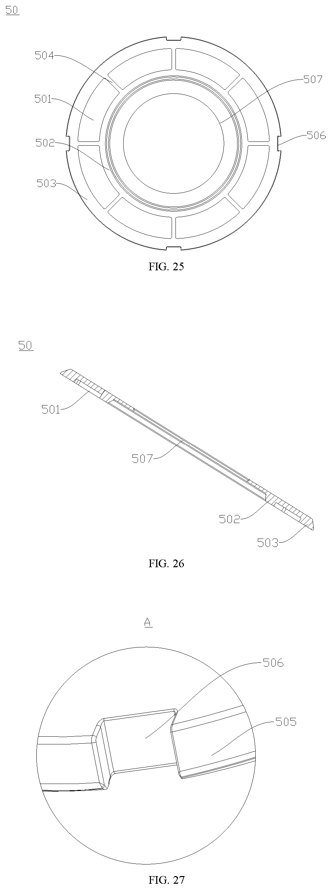

As shown in FIGs. 24 and 25, the battery 1 further includes the first insulating element 50 located within the housing 11. The first insulating element 50 is located on one side of the battery cell assembly 30 facing the end of the housing 11. The first insulating element 50 is used to isolate the end of the housing 11 from at least part of the battery cell assembly 30 to meet insulation design requirements between at least part of the battery cell assembly 30 and the end of the housing 11.

The first insulating element 50 is provided with one or more notches 506 on the side surface thereof. The one or more notches 506 extend through the first insulating element 50 in the thickness direction of the first insulating element 50. The provision of the notches on the side surface of the first insulating element 50 allow that the first insulating element 50 can be deformed at the notches 506 when the first insulating element 50 is assembled into the housing, thereby facilitating smooth insertion of the first insulating element 50 into the housing.

In some embodiments, the first insulating element 50 is provided with a plurality of notches 506 on the side surface thereof, and the plurality of notches 506 are provided in the circumferential direction of the first insulating element 50. When the first insulating element 50 is assembled into the housing, the first insulating element 50 can be deformed at a plurality of positions in the circumferential direction, thereby facilitating smooth insertion of the first insulating element 50 into the housing.

Here, the plurality of notches 506 are equidistantly distributed in the circumferential direction of the first insulating element 50. When the first insulating element 50 is deformed during the insertion process, the generated stress can be uniformly distributed in the circumferential direction of the first insulating element 50, thereby contributing to improving the stability of the first insulating element 50 itself during the insertion process. In the present embodiments, four notches 506 are provided and arranged at uniform intervals to better ensure installation.

The included angle between the side wall of the notch 506 and the bottom surface of the notch 506 is an acute angle or a right angle (≤90°). The side wall of the notch 506 refers to one of two opposite side walls of the notch 506 in the circumferential direction of the first insulating element 50, and the bottom surface of the notch 506 refers to a surface connected between the two side walls. By setting the included angle between the side wall of the notch 506 and the bottom surface of the notch 506 as ≤90°, the first insulating element 50 can be more easily deformed by pressing or pulling at the position where the notch 506 is located during the insertion process, thereby facilitating the smooth insertion of the first insulating element 50 into the housing.

It is also to be noted that, in the present embodiments, the arc length of the side of the notch 506 remote from the current collector 35 is less than the arc length of the side close to the current collector 35, so that it is possible to ensure that the notch(s) 506 can provide the space for deformation of the first insulating element 50, thereby facilitating the fitting of the first insulating element 50 into the housing.

In some embodiments, the arc length of the side of the notch 506 close to the current collector 35 is M29, where 0.1mm≤M29≤10mm. By setting this parameter, it is possible to ensure that the deformation space is sufficient, while avoiding the insulation effect being affected by the excessive size of the notch 506.

As shown in FIGs. 23 to 25, the battery 1 includes the housing 11, the current collector 35, and the first insulating element 50. The current collector 35 is provided in the housing 11. In the axial direction of the battery 1, the first insulating element 50 is connected between the current collector 35 and the housing 11. A third groove 501 is disposed at a side of the first insulating element 50 facing the current collector 35. The volume of the third groove 501 is M21, the maximum thickness of the first insulating element 50 is M22, and the bottom area of the first insulating element 50 is M23, where M21≥10%×M22×M23.

Since the first insulating element 50 is installed between the current collector 35 and the housing 11, and the third groove 501 is provided on the side of the first insulating element 50 facing the current collector 35, the air chamber space can be reserved in the interior of the housing 11 by the provision of the third groove 501, so that the expansion space can be reserved in the interior of the housing 11 for the jelly roll, thereby ensuring safety in use of the battery 1. At the same time, the volume of the reserved third groove 501 is not less than 10% of the volume of the space occupied by the first insulating element 50. According to the ideal gas state equation, PV=NRT, a certain volume is reserved inside the housing 11, so that the internal pressure of the housing 11 can be reduced, thereby ensuring the use safety of the battery 1. In addition, the third groove 501 is provided in the first insulating element 50, so that a part of the internal space of the housing 11 can be reserved without affecting the original volume of the housing 11, thereby avoiding the fact that all the interior of the housing 11 is filled with entities, ensuring the safety of the battery 1, reducing the overall weight of the battery 1, and meeting the requirements of the lightweight design of the battery 1.

It will be appreciated that the ideal gas state equation is PV=NRT, where: P is the pressure (Pa), V is the gas volume (m³), T is the temperature (K), n is the amount of substance of the gas (mol), and R is the molar gas constant (also called the universal gas constant) (J/(mol.K)). It can be seen that the gas volume V is inversely proportional to the pressure P, when the gas volume V increases, the pressure P decreases. Therefore, by providing the third groove 501 in the first insulating element 50, the gas volume space inside the housing 11 can be increased, the pressure inside the housing 11 can be reduced, thereby ensuring safety in use of the battery 1.

It is to also be noted that, in order to ensure the insulating effect between the current collector 35 and the inner side wall of the housing 11 during the assembly process, the adhesive treatment may be applied between the current collector 35 and the housing 11, so as to ensure the insulating effect between the current collector 35 and the housing 11 with cooperating with the first insulating element 50.

In some embodiments, the depth of the third groove 501 is M24 and the distance between the bottom wall of the third groove 501 and the side of the first insulating element 50 remote from the current collector 35 is M25, where M25=M22-M24, and 0.3mm≤M25≤80%M22. In the present embodiment, the distance between the bottom wall of the third groove 501 and the side of the first insulating element 50 remote from the current collector 35 is the remaining thickness of the first insulating element 50 after the third groove 501 is excavated. The remaining thickness of the first insulating element 50 after the third groove 501 is excavated is not less than 0.3 mm, but not more than 80% of the total thickness of the first insulating element 50. This ensures the depth of the opened third groove 501 to be sufficient, while ensuring the strength of the first insulating element 50, and preventing the first insulating element 50 from being broken caused by small remaining thickness during assembly or use, thereby ensuring normal use of the battery 1.

In some embodiments, referring to FIGs. 25 and 26, an inner ring reinforcing rib 502 and an outer ring reinforcing rib 503 are provided on a side of the first insulating element 50 toward the current collector 35. The inner ring reinforcing rib 502 and the outer ring reinforcing rib 503 are provided at intervals. The third groove 501 is located between the inner ring reinforcing rib 502 and the outer ring reinforcing rib 503. By the arrangement of the inner ring reinforcing rib 502 and the outer ring reinforcing rib 503, the problem that the overall strength of the first insulating element 50 is reduced due to the opening of the third groove 501 of the first insulating element 50 is avoided, so that the overall strength of the first insulating element 50 can be ensured, and the normal use of the first insulating element 50 can be ensured.

In some embodiments, in order to ensure the strength of the first insulating element 50, the inner ring reinforcing rib 502 and the outer ring reinforcing rib 503 are connected by one or more connection reinforcing ribs 504.

In some embodiments, referring to FIGs. 25 and 26, a plurality of connection reinforcing ribs 504 are provided and are arranged at intervals in the circumferential direction of the first insulating element 50. In this case, the third groove 501 can be divided into a plurality of sub-grooves by the plurality of connection reinforcing ribs 504. As a result, the strength of each part of the first insulating element 50 can be made uniform, and the connection reinforcing ribs 504 connect the inner ring reinforcing rib 502 and the outer ring reinforcing rib 503, so that the strength of the inner ring reinforcing rib 502 and the outer ring reinforcing rib 503 can be improved, thereby ensuring the strength of the first insulating element 50.

It will be appreciated that, in the present embodiments, eight connection reinforcing ribs 504 are provided and arranged at uniform intervals in the circumferential direction of the first insulating element 50. Further, in order to ensure the connection strength between the inner ring reinforcing rib 502 and the outer ring reinforcing rib 503, the number of the connection reinforcing ribs 504 should be set to not less than four in the specific arrangement.

In some embodiments, referring to FIGs. 25 and 26, the outer ring reinforcing rib 503 is sleeved on the outer periphery of the inner ring reinforcing rib 502, the spacing between the inner ring reinforcing rib 502 and the outer ring reinforcing rib 503 is M26, and the maximum outer diameter of the first insulating element 50 is M27, where 30%M27≤M26≤70%M27. As a result, the distance between the inner ring reinforcing rib 502 and the outer ring reinforcing rib 503 is made to be moderate, so as to avoid compromising the reinforcement effect due to excessive spacing between the inner ring reinforcing rib 502 and the outer ring reinforcing rib 503 is too large.

In some embodiments, the inner ring reinforcing rib 502, the outer ring reinforcing rib 503, and the connection reinforcing ribs 504 each have a thickness of M28 in the axial direction of the first insulating element 50, where M22≥M28≥0.5M25. In the present embodiment, the thickness of each of the inner ring reinforcing rib 502, the outer ring reinforcing rib 503, and the connection reinforcing rib 504 is not less than half of the remaining thickness of the first insulating element 50 after the third groove 501 is removed, so that the thickness of the inner ring reinforcing rib 502, the outer ring reinforcing rib 503, and the connection reinforcing rib 504 each can be ensured to be sufficient to provide a reinforcing effect, thereby ensuring normal use of the first insulating element 50.

In some embodiments, as shown in FIG. 27, a transition slope 505 is formed at the peripheral outer edge of the first insulating element 50, gradually sloping from the side of the first insulating element 50 remote from the current collector 35 to the side of the first insulating element 50 adjacent the current collector 35 and toward the housing 11. In the process of assembling the battery 1, the difference between the diameter of the first insulating element 50 and the inner diameter of the inner side wall of the housing 11 is low in order to ensure the insulation effect. Therefore, the transition slope 505 can be provided on the outer periphery of the first insulating element 50, i.e., providing the chamfer on the outer periphery of the first insulating element 50, so that the assembling process of the first insulating element 50 and the housing 11 can be smoothly accomplished, facilitating the installation.

In some embodiments, as shown in FIG. 23, in the axial direction of the first insulating element 50, the outer side of the transition slope 505 is provided in an arc shape, and the radius of the transition slope 505 is M26, where M22≥M26≥0.5M22. The outer periphery of the first insulating element 50 is provided with a rounded corner, so that the first insulating element 50 can be easily fitted into the housing 11, but also the radius of the rounded corner can be prevented from being excessively large by the setting of parameters, thereby preventing the gap between the circumferential outer edge of the first insulating element 50 and the housing 11 from being excessively large, thereby ensuring that the first insulating element 50 can achieve an insulating effect.

In some embodiments, in the axial direction of the first insulating element 50, the transition slope 505 has a height of M27 and a width of M28, where M22≥M27≥0.5M22, and 4mm≥M28≥0.3mm. That is, the outer periphery of the first insulating element 50 is provided with an inverted C angle, so that the first insulating element 50 can be conveniently fitted into the housing 11, but also the size of the inverted C angle can be prevented from being excessively large by the setting of parameters, thereby preventing the gap between the circumferential outer edge of the first insulating element 50 and the housing 11 from being excessively large, thereby ensuring that the first insulating element 50 can achieve an insulating effect.

In some embodiments, the jelly roll is also included on the side of the first insulating element 50 close to the current collector. The jelly roll has a diameter of M30, the inner diameter of the housing 11 is M31, and the first insulating element 50 has a maximum diameter of M32, where M30<M32<M31. In the present embodiment, the diameter of the first insulating element 50 is between the diameter of the jelly roll and the inner diameter of the housing 11, so that the first insulating element 50 can insulate the current collector 35 from the housing 11, and can be conveniently fitted into the housing 11.

In some embodiments, for ease of assembly, a second opening 114 is formed at one side of the housing 11, a fourth through-hole 507 is provided in the first insulating element 50. and the second opening 114 is opposed to the fourth through-hole 507.

In some embodiments, the fourth through-hole 507 has a diameter of M33 and the second opening 114 has a diameter of M34 in the radial direction of the housing 11, where M33≥M34. In the assembling process, after the current collector 35 is connected to the terminal, insulation between the current collector 35 and the housing 11 is achieved by the first insulating element 50. At the same time, a plastic element is provided between the housing 11 and the first insulating element 50 in order to ensure the insulation effect. Therefore, the diameter of the fourth through-hole 507 is less than that of the opening to provide an assembly space for the plastic element and to ensure an insulating effect.

It is also to be noted that in the present embodiments, the minimum distance between the inner ring reinforcing rib 502 and the fourth through-hole 507 is between 0.5 mm to 6 mm, so that injection molding is facilitated. The distance between the inner ring reinforcing rib 502 and the fourth through-hole 507 is prevented from being excessively small, thereby ensuring a reinforcing effect.

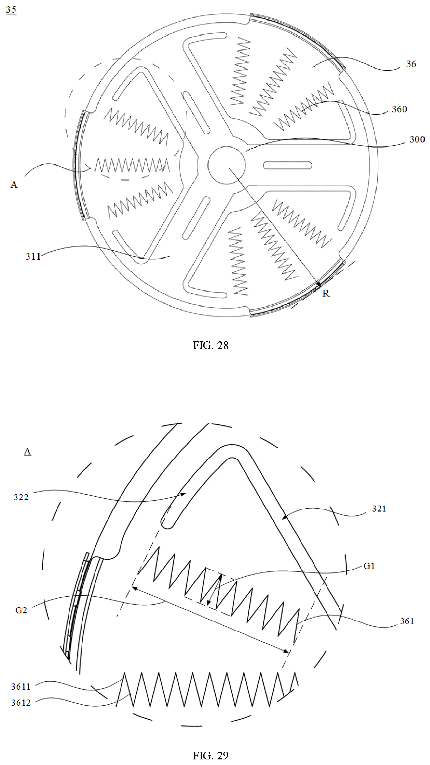

Referring to FIGs. 28 to 29, FIG. 28 is a schematic view of the first configuration of a current collector 35 according to some embodiments of the present disclosure, and FIG. 29 is an enlarged schematic view of a portion A shown in FIG. 28. According to some embodiments of the present disclosure, the battery 1 is provided. The battery 1 includes the housing, the jelly roll 33, and the current collector 35. The housing is provided with the accommodating chamber, the jelly roll 33 is provided in the accommodating chamber, the current collector 35 is welded to the jelly roll 33, and the jelly roll 33 includes an end surface facing the current collector 35. The welding area formed between the end surface and the current collector 35 account for 10% to 90% of the area of the end surface. That is, the welding area formed between the end surface and the current collector 35 is greater than or equal to 10% and less than or equal to 90% of the area of the end surface.

Specifically, the welding area of the jelly roll 33 of the battery 1 refers to an area on the end surface of the jelly roll 33 that can be safely and efficiently welded with the current collector 35. The design of the battery 1 determines the shape and size of the jelly roll 33 and the position of tabs, thereby affecting the size and shape of the welding area. The size of the welding area directly affects the robustness of the welding, the reliability of the electrical connection and the overcurrent capability of the battery 1. If the welding area is too large or too small, it is possible to cause the battery 1 to malfunction during use and even cause a safety accident.

Specifically, if the welding area is insufficient, the strength of the welding point may be insufficient, and when the battery 1 is subjected to external force shock or vibration, the welding point may be easily dropped off or broken, thereby causing problems such as internal short circuit or open circuit of the battery 1. However, since a central hole is formed in the center of the jelly roll 33 after winding, and wrinkles are formed in the edge of the jelly roll 33, the central region and the outermost region of the jelly roll 33 cannot be directly welded to the current collector 35, and the upper limit of the welding area is limited.

According to some embodiments of the present disclosure, the battery 1 is provided. The battery 1 includes the jelly roll 33, and the welding area formed between the end surface of the jelly roll 33 and the current collector 35 are between 10% to 90% of the area of the end surface. On the basis of the structure of the jelly roll 33 itself, an effective welding area is ensured, so that the connection strength between the current collector 35 and the jelly roll 33 can be increased, and the structural connection stability is improved.

For example, the welding area between the end surface of the jelly roll 33 and the current collector 35 is 15%, 20%, 25%, 30%, 35%, 40%, 45%, 50%, 55%, 60%, 65%, 70%, 75%, 80%, 85%, 90%, etc. of the area of the end surface, which is not limited in the present embodiments.

In some embodiments, the current collector 35 has a plurality of second welding zones 36 disposed about the center of the current collector 35. A plurality of welding lines 360 are disposed on a side of each of the second welding zones 36 toward the jelly roll 33. The welding lines 360 are welding tracks of the current collector 35 and the jelly roll 33. The second welding zones 36 are provided around the center of the current collector 35 to better adapt to the shape of the end surface of the jelly roll 33 and to increase the welding area of the end surface of the current collector 35 and the jelly roll 33.

In some embodiments, the radius of the current collector 35 is R and the length of at least one welding line 360 is greater than or equal to 0.05R. For example, if the radius length of the current collector 35 is 20 mm, the length of the at least one welding line 360 is greater than or equal to 1 mm, which is not limited in the present embodiments.

In some embodiments, the length of the at least one welding line 360 is greater than or equal to 3 mm, for example, may be 3 mm, 4 mm, 5 mm, 6 mm, 7 mm, or the like. If the length of the at least one welding line 360 is relatively short, multiple welding is required, and intermittent multiple welding may affect the welding efficiency, and increasing the welding length may ensure the continuity of the welding.

In some embodiments, the line width of each welding line 360 is greater than or equal to 0.05 mm, for example, may be 0.06 mm, 0.07 mm, 0.08 mm, 0.08 mm, 0.09 mm, etc., which is not limited in the present embodiment.

In some embodiments, the welding fusion width of each welding line 360 is greater than or equal to 0.1 mm, for example, may be 0.1 mm, 0.2 mm, 0.3 mm, 0.4 mm, 0.5 mm, etc., which is not limited by the present embodiments.

In some embodiments, each welding line 360 includes at least one kinked portion 361. Each of the at least one kinked portion 361 includes a first connection segment 3611 and a second connection segment 3612 that are interconnected to each other. The included angle between the first connection segment 3611 and the adjacent second connection segment 3612 is greater than or equal to 0° and less than 180°.

For example, the included angle between the first connection segment 3611 and adjacent second connection segment 3612 may be 10°, 20°, 30°, 40°, 50°, 60°, 70°, 80°, 90°, 100°, 110°, 120°, 130°, 140°, 150°, 160°, 170°, 175°, or the like, which is not limited by the present embodiments.

It will be appreciated that the kinked portion 361 may increase the welding area, and the increase in the welding area may improve the reliability and durability of the welding. The problems of welding cracking, falling and the like caused by insufficient welding strength are avoided. Therefore, the fatigue resistance of the welding is improved, and the service life of the battery 1 is prolonged.

In some embodiments, each welding line 360 includes a plurality of kinked portions 361 connected in turn. It will be appreciated that the provision of the plurality of kinked portions 361 in turn ensures welding strength, and continuity and consistency of welding. The included angles between the first connection segment 3611 and adjacent second connection segment 3612 of each second welding zone 36 may or may not be equal.

In some embodiments, in each of the kinked portions 361, one end of the first connection segment 3611 and one end of the second connection segment 3612 are connected to each other at an end point, and the other end of the first connection segment 3611 and the other end of the second connection segment 3612 are spaced apart and are located on the same straight line, and the distance from the end point to the straight line is greater than or equal to 0.5 mm.

Specifically, since the welding line 360 includes a plurality of kinked portions 361, the width of the welding line 360 is greater than the line width of the welding line 360 itself, and the first connection segment 3611 and the adjacent second connection segment 3612 form a triangular structure. The width of the welding line 360 is equal to the height G1 from the top end of each kinked portion 361 to the bottom end of each kinked portion 361, and G1 is greater than or equal to 0.5 mm, for example, may be 0.5 mm, 1 mm, 1.5 mm, 2 mm, 2.5 mm, 3 mm, and the like, which is not limited herein.

In some examples, each welding line 360 includes a starting end and a terminal end. When the welding line 360 is in a bent configuration, if the starting end and the terminal end are located on the same straight line radiating outwardly from the center of the current collector 35, the length G2 of the welding line 360 is equal to the difference between the length of the starting end to the center and the length of the terminal end to the center.

If the starting end and the terminal end are located on different lines radiating outwardly from the center of the current collector 35, with the line passing through the terminal end and the center of the current collector 35 as a first line and the line passing through the terminal end and perpendicular to the first line as a second line, the length G2 of the welding line 360 is equal to the distance from the starting end to the second line.

In some embodiments, each welding line 360 extends in the radial direction of the jelly roll 33. Specifically, each second welding zone 36 includes the plurality of welding lines 360 disposed in sequence in the circumferential direction, each welding line 360 extending in the radial direction of the jelly roll 33. This arrangement maximizes the space of the second welding zone 36 and increases the welding area.

In some embodiments, the current collector 35 includes a central portion 300 and a plurality of connection elements 311 connected to the central portion 300 and arranged to extend in the radial direction of the current collector 35. The plurality of connection elements 311 are arranged at intervals, the second welding zone 36 is provided between adjacent two of the connection elements 311. A first gap 321 is formed between each second welding zone 36 and the central portion 300, a second gap 322 is formed between each second welding zone 36 and each connection element 311, and the first gap 321 communicates with the second gap 322.

Specifically, the first gap 321 extends in the radial direction of the current collector 35 and the second gap 322 extends in the circumferential direction of the current collector 35 to form a hollow-out region surrounding a portion of each of the second welding zones 36. It will be appreciated that chemical reactions, such as overcharging, overheating, electrolyte decomposition, and the like, occur inside the battery 1, gas may be generated and may cause expansion or explosion of the battery 1 in case of excessive accumulation of gas. The hollowed-out area is provided to ensure the gas generated during use of the jelly roll 33 to be vented from the jelly roll 33 in time and to form a smooth venting passage.

In some embodiments, the current collector 35 includes three connection elements 311 that divide the current collector 35 into three second welding zones 36, each of which is in a fan-shaped configuration. The number of the connection elements 311 may also be 4, 5, 6, etc., and the number of the second welding zones 36 may be 4, 5, 6, etc., which is not limited in the present embodiments.

In some embodiments, each connecting element 311 is bent to protrude remote from the jelly roll 33. The bending of each connecting element 311 ensures effective contact of the cover assembly of the battery 1 with the current collector 35, so that the cover assembly of the battery 1 is charged to form cathodic protection, thereby improving corrosion resistance of the cover assembly, ensuring safety of the cover assembly. In addition, the protrusion may increase the hollow area of the current collector 35, broaden the venting passage through which the gas is vented from the jelly roll 33, and improve the safety of the battery cell.

In some embodiments, the width of each connection element 311 may be between 4 mm to 8 mm, for example, may be 4 mm, 4.5 mm, 5 mm, 5.5 mm, 6 mm, 6.5 mm, 7 mm, 7.5 mm, 8 mm, etc., and the appropriate width of the connection element 311 may be provided to ensure that sufficient resilient force is provided after the connection element 311 is bent to protrude and pressed down.

In some embodiments, the contact area between the end surface and the current collector 35 is 50% to 100% of the area of the end surface. That is, the contact area between the end surface and the current collector 35 is greater than or equal to 50% and less than or equal to 100% of the area of the end surface.

It will be appreciated that since the current collector 35 is provided with gaps or protrusions, the end surface cannot be fully connected to the current collector 35. For example, the contact area between the end surface and the current collector 35 may be 50%, 60%, 70%, 80%, 90%, 100% of the area of the end surface, which is not limited in the embodiments of the present disclosure.

In some embodiments, in each second welding zone 36, the length of the welding line 360 located in the middle of the second welding zone 36 is greater than the length of the welding lines 360 located on both sides of the second welding zone 36. It will be appreciated that since the welding line 360 has a certain width, and if the length of the welding lines 360 on both sides of the second welding zone 36 is too long, the welding may occur on the edge of the second welding zone 36, and thus the length of the welding line 360 at the middle of the second welding zone 36 may be larger than the length of the welding lines 360 at both sides of the second welding zone 36, and the lengths of the welding lines 360 decrease from the middle of each second welding zone 36 to both sides to ensure the welding effect of each second welding zone 36.

In some embodiments, the length of the welding line 360 located at the middle of the second welding zone 36 is a first length, the length of the welding lines 360 located on both sides of the second welding zone 36 is a second length, and the difference between the first length and the second length is greater than or equal to 0.1 mm. It will be appreciated that in order to ensure consistency of the plurality of welding lines 360 in the second welding zone 36, the difference between the first length and the second length may be set to be a smaller value.

For example, each second welding zone 36 is provided with three welding lines 360 including a first wire body disposed in the middle of the second welding zone 36 and two second wire bodies disposed on both sides of the first wire body in the circumferential direction of the current collector 35, respectively. The two second wire bodies have the same length. The first wire body has a first length, the second wire bodies have a second length, and the difference between the first length and the second length is greater than or equal to 0.1 mm, for example, may be 0.1 mm, 0.2 mm, 0.3 mm, 0.4 mm, 0.5 mm, 0.6 mm, 0.7 mm, 0.8 mm, 0.9 mm, and 1 mm, which is not limited in the present embodiment.

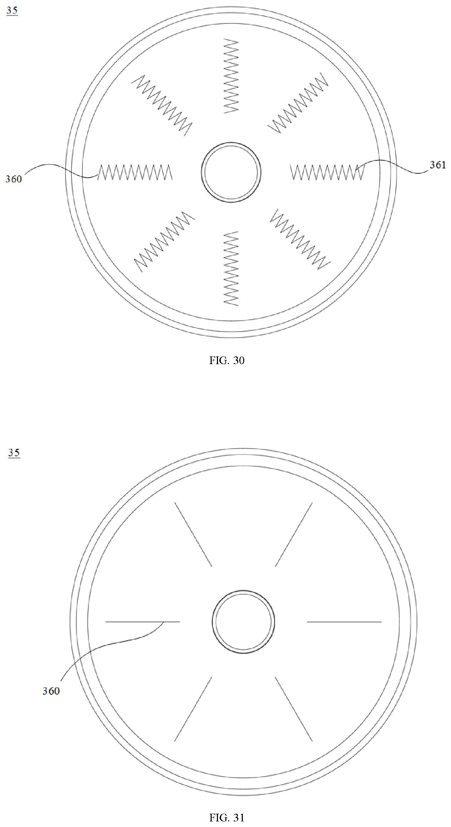

Referring to FIGs. 30 to 33, FIG. 30 is a schematic view of the second configuration of the current collector 35 according to some embodiments of the present disclosure, and FIG. 31 is a schematic view of the third configuration of the current collector 35 according to some embodiments of the present disclosure. In some embodiments, the current collector 35 as a whole is a plane, the connection elements 311 and the gaps are not provided in the center of the current collector 35, the current collector 35 includes a plurality of welding lines 360 disposed in the radial direction, and the length of each welding line 360 may be the same.

In some embodiments, each welding line 360 is designed with a straight configuration, and the plurality of welding lines 360 can extend linearly outwardly from the center of the current collector 35 toward its periphery. The extension line of each welding line 360 passes through the center of the fan-shaped structure. In order to ensure the welding quality, the length of the plurality of welding wires 360 can be kept the same, and the wire width of the welding wires 360 can be increased by an appropriate amount.

In some examples, each welding line 360 includes the starting end and the terminal end. When the welding lines 360 are in the straight configuration, the length of the welding lines 360 is equal to the difference between the length of the starting end to the center and the length of the terminal end to the center.

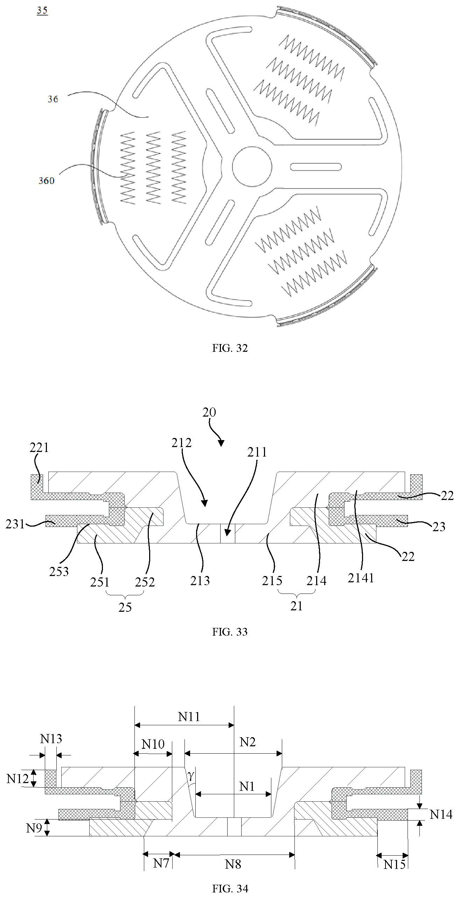

Referring to FIG. 32, it is a schematic view of a configuration of a current collector 35 according to some embodiments of the present disclosure. In some embodiments, a plurality of welding lines 360 are disposed circumferentially around the jelly roll 33. Specifically, a plurality of welding lines 360 are provided in each of the second welding zones 36 in a direction remote from the center of the jelly roll 33, each of the welding lines 360 extends circumferentially in the jelly roll 33, and the plurality of welding lines 360 are co-circularly formed into an annular-like structure.

In some examples, the welding wires 360 are formed in an arc-shaped structure in the circumferential direction of the jelly roll, and the length G2 of the welding wires 360 is equal to the arc length between the included angles at the two ends of each welding wire 360.

As shown in FIG. 33, the battery 1 further includes a terminal assembly 20 connected to an end of the housing 11 remote from the cover assembly 12. A first through-hole 211 is formed in the terminal assembly 20 and capable of serving as a liquid injection hole to facilitate a liquid injection operation in the manufacturing process of the battery 1. Alternatively, the first through-hole 211 may be used as a venting hole to facilitate the venting of the gas generated during the formation of the battery 1, thereby contributing to the improvement of the storage capacity of the gas generated during the use of the battery 1, thereby improving the safety during the use of the battery 1. Here, the diameter of the first through-hole 211 may be set to be greater than or equal to 1 mm to facilitate liquid injection or gas venting.

In some embodiments, a first groove 212 is formed in a side of the terminal assembly 20 remote from the housing 11, and the first through-hole 211 is provided at the bottom of the first groove 212. The battery 1 further includes a battery cell assembly 30 located in the housing 11 and connected to the terminal assembly 20. By forming the first groove 212 on the side of the terminal assembly 20 remote from the housing 11, the thickness of the terminal assembly 20 at a position corresponding to the first groove 212 can be reduced, thereby contributing to improving the welding effect of the terminal assembly 20 and the battery cell assembly 30.

Here, the bottom of the first groove 212 includes a first welding zone 213 for welding to the battery cell assembly 30. The first welding zone 213 is disposed around the first through-hole 211. When the terminal assembly 20 and the battery cell assembly 30 are welded, annular welding can be performed in the circumferential direction of the first through-hole 211, thereby helping to reduce the influence of the first through-hole 211 on the welding effect of the terminal assembly 20 and the battery cell assembly 30, and ensuring the over-current capability of the bottom of the first groove 212.

It is to be noted that the first through-hole 211 can be sealed by a sealing pin before the terminal assembly 20 and the battery cell assembly 30 are welded to each other, so as to make up for the decrease of the first welding zone 213 caused by the arrangement of the first through-hole 211. At this time, the entire bottom area of the first groove 212 can be used as the first welding zone 213 of the terminal assembly 20 and the battery cell assembly 30, thereby helping to ensure the welding effect of the terminal assembly 20 and the battery cell assembly 30.

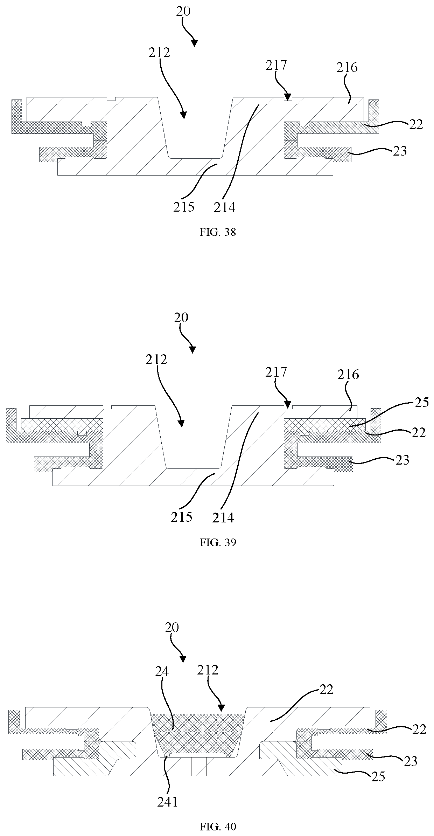

In other embodiments, as shown in FIG. 40, the terminal assembly 20 includes a post terminal 21 connected to an end of the housing 11 remote from the cover assembly 12 and a second sealing element 24. The first groove 212 is formed in the post terminal 21. The second sealing element 24 is provided in the first groove 212 and seals the first through-hole 211. One or more abutment portions 241 are disposed on a side of the second sealing element 24 facing the first through-hole 211 and protrude toward the first through-hole 211, and the abutment portions 241 are provided to abut against the bottom of the first groove 212.

When the terminal assembly 20 and the battery cell assembly 30 are welded, a convex hull is formed at the bottom of the first groove 212, and when the second sealing element 24 is placed in the first groove 212 and welded, the second sealing element 24 may shake under the action of the convex hull. By providing the abutment portions 241 at the bottom of the second sealing element 24 to abut against the bottom of the first groove 212, the influence of the convex hull on the stability of the second sealing element 24 can be reduced, thereby ensuring the welding effect of the second sealing element 24 and the terminal assembly 20. The height of the abutment portion 241 can be set to be greater than or equal to 0.1 mm to prevent the second sealing element 24 from shaking during the placing process.

At least two abutment portions 241 are disposed at one side of the second sealing element 24 facing the first through-hole 211. The abutment portions 241 are symmetrically distributed in the radial direction of the first through-hole 211, so as to improve the stability of the second sealing element 24 in the welding process and ensure the welding effect of the second sealing element 24 and the terminal assembly 20. In order to avoid interference with the welding between the post terminal 21 and the battery cell assembly 30 caused by the arrangement of the abutment portions 241, the spacing between two abutment portions 241 distributed symmetrically in the radial direction may be set to be larger than the first welding zone 213 of the post terminal 21 and the battery cell assembly 30.

In some embodiments, as shown in FIG. 34, the first groove 212 has an overall expansion trend, the bottom diameter N1 of the first groove 212 is set to be N1≥2mm, the opening diameter N2 of the first groove 212 in the post terminal 21 is set to be N2≥3mm, so that the side walls of the first groove 212 are set to be inclined, and the side walls of the first groove 212 are inclined at an angle γ≥3° with regard to the axial direction of the first groove 212, thereby facilitating assembly and welding of the second sealing element 24. Further, to ensure that the post terminal 21 has sufficient strength, the thickness of the post terminal 21 at the position corresponding to the first groove 212 may be set to be greater than or equal to 0.5 mm.

The post terminal 21 includes a first connection portion 214 which is disposed on the side of the housing 11 remote from the battery cell assembly 30, and a second connection portion 215 which is located on the side of the housing 11 facing the battery cell assembly 30. The first connection portion 214 is used for connecting an external circuit, and the second connection portion 215 is used for connecting the battery cell assembly 30.

The terminal assembly 20 further includes a second insulating element 22 positioned between the first connection portion 214 and the housing 11, and a third insulating element 23 positioned between the second connection portion 215 and the housing 11 to achieve insulating connection of the post terminals 21 to the housing 11.

The first connection portion 214 is provided with a first rib 2141 on the side facing the second insulating element 22. When the terminal assembly 20 is assembled, the first rib 2141 can press the second insulating element 22 so that the first connection portion 214 is tightly connected to the second insulating element 22, thereby improving the sealing effect of the first connection portion 214 and the second insulating element 22.

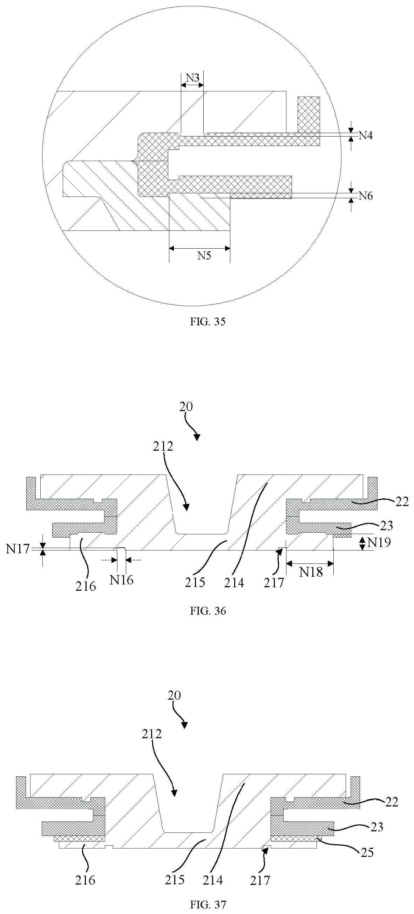

Here, as shown in FIG. 35, the width N3 of the first rib 2141 can be set to be N3≥0.1mm, and the height N4 of the first rib 2141 can be set to be N4≥0.05mm to ensure that the first rib 2141 has a sufficient contact area with the second insulating element 22, thereby ensuring the sealing effect of the first connection portion 214 with the second insulating element 22.

In some embodiments, the terminal assembly 20 further includes a pressing ring 25 disposed between the third insulating element 23 and the second connection portion 215, while the pressing ring 25 further abuts against the first connection portion 214 to support the first connection portion 214 and the third insulating element 23, thereby improving the overall structural strength of the terminal assembly 20.

A second rib 253 is provided on one side of the pressing ring 25 facing the third insulating element 23. When the terminal assembly 20 is assembled, the second rib 253 can press the third insulating element 23 so that the pressing ring 25 is tightly connected to the third insulating element 23, thereby improving the sealing effect of the pressing ring 25 and the third insulating element 23.

Here, the width N5 of the second rib 253 can be set to be N5≥0.1mm, and the height N6 of the second rib 253 can be set to be N6≥0.05mm to ensure that the second rib 253 has a sufficient contact area with the third insulating element 23, thereby ensuring the sealing effect of the second rib 253 with the third insulating element 23.

As shown in FIG. 34, the pressing ring 25 includes a first support portion 251 for supporting the third insulating element 23, and a second support portion 252 for supporting the first connection portion 214 and providing between the first connection portion 214 and the second connection portion 215.

The width of the overlapping portion of the second support portion 252 and the orthographic projection of the second connection portion 215 in the axial direction of the battery 1 is N7 in the radial direction of the battery 1, the width of the nonoverlapping portion of the second support portion 252 and the orthographic projection of the second connection portion 215 in the axial direction of the battery 1 is N8 in the radial direction of the battery 1, the thickness of the first support portion 251 is N9, the width of the second support portion 252 in the radial direction of the battery 1 is N10, and the distance between the outer surface of the second support portion 252 and the central axis of the battery 1 is N11. In order to ensure the overall structural stability of the terminal assembly 20 and the riveting stability of the post terminals 21 and the pressing ring 25, these parameters can be set to be N7≥0.05N8, N9≥0.3mm, N10≥0.1N11, while ensuring that the overall structure of the battery 1 is not deformed after the second insulating element 22 and the third insulating element 23 are pressed.

It is to be noted that the second insulating element 22 and the third insulating element 23 in the embodiments of the present disclosure are provided separately, and the edge of the second insulating element 22 protrudes to the side surface of the first connection portion 214 to form a first protective portion 221 on the side surface of the first connection portion 214 for external insulation, so that short-circuit between the terminal assembly 20 and the housing 11 after long-term use of the battery 1 is avoided. The height N12 of the first protective portion 221 and the width N13 of the first protective portion 221 in the radial direction of the battery 1 satisfy the relationship N12+N13≥0.8mm.

Correspondingly, the third insulating element 23 protrudes from the side surface of the pressing ring 25 and forms a second protective portion 231. The height N14 of the second protective portion 231 and the width N15 of the second protective portion 231 in the radial direction of the battery 1 satisfy a relationship N14+N15≥0.8mm so as to avoid short-circuit between the terminal assembly 20 and the housing 11 after long-time use of the battery 1.

The material of the second insulating element 22 includes fluorine rubber or soluble polytetrafluoroethylene, and the material of the third insulating element 23 includes fluorine rubber, soluble polytetrafluoroethylene, polypropylene, or polyphenylene sulfide.

In some embodiments, as shown in FIG. 36, when the second connection portion 215 protrudes directly below the end portion of the housing 11, the arrangement of the pressing ring 25 may be eliminated. At this time, the second connection portion 215 may be riveted in the form of an inverted riveting. That is, a riveting portion 216 for riveting of the second connection portion 215 is initially in a vertical state, is flipped into a horizontal state after extending into the housing 11, and then is riveted with the corresponding third insulating element 23.

A second groove 217 is provided at a side of the second connection portion 215 facing the battery cell assembly 30. The second groove 217 is provided near the edge of the riveting portion 216, so as to reduce the risk of cracking of the second connection portion 215 due to deformation during the flip riveting process. The second groove 217 has a width N16≥0.05mm in the radial direction of the battery 1 and a depth N17≥0.05mm.

To ensure the riveting effect of the riveting portion 216 and the third insulating element 23, the width N18 of the riveting portion 216 in the radial direction of the battery 1 can be set to be 0.2mm≤N18≤10mm, and the height N19 of the riveting portion 216 can be set to be 0.2mm≤N19≤5mm.

It is to be noted that in order to prevent deformation or cracking of the post terminal 21 after the riveting portion 216 is flipped, the pressing ring 25 may be added between the riveting portion 216 and the third insulating element 23, as shown in FIG. 37, so as to improve the overall structural strength of the terminal assembly 20 while controlling the riveting height.

In addition, the riveting portion 216 may be provided at the first connection portion 214 when the connection is performed in a flip riveting manner. Correspondingly, the second groove 217 is provided at the side of the first connection portion 214 remote from the battery cell assembly 30, as shown in FIG. 38. Alternatively, the pressing ring 25 may be also provided between the corresponding riveting portion 216 and the second insulating element 22, as shown in FIG. 39. For details, reference may be made to the embodiments in which the riveting portion 216 is provided at the second connection portion 215, and details are not described herein.

Next, some embodiments of the present disclosure provide a battery pack including a battery, and a specific structure of the battery is described with reference to the above embodiments. Since all the technical solutions of the above embodiments are used in the battery pack, at least all the beneficial effects of the technical solutions of the above embodiments are provided, and details are not described herein.

Embodiments of the present disclosure have been described in detail, and specific examples have been used herein to illustrate the principles and embodiments of the present disclosure. The description of the above embodiments is merely provided to assist in understanding the method of the present disclosure and the core concepts thereof. Variations will occur to those skilled in the art in both the detailed description and the scope of application in accordance with the teachings of the present disclosure. In view of the foregoing, the present description should not be construed as limiting the application.

## Claims

1. A battery (1) comprising:
a housing (11) having a first opening (113) formed at one end thereof;
a cover assembly (12) connected to the housing (11) and sealing the first opening (113); and
a first sealing element (13) disposed between the cover assembly (12) and the housing (11), wherein the first sealing element (13) wraps a side surface of the cover assembly (12) and forms a sealed connection to the cover assembly (12) and the housing (11), and a gap is formed between the first sealing element (13) and the side surface of the cover assembly (12).

2. The battery (1) according to claim 1, wherein the housing (11) comprises an engagement portion (111) that is buckled to the cover assembly (12), the first sealing element (13) is positioned between the engagement portion (111) and the cover assembly (12), and the first sealing element (13) protrudes from the engagement portion (111).

3. The battery (1) according to claim 2, wherein the engagement portion (111) and the first sealing element (13) wraps the side surface of the cover assembly (12) and are buckled to opposite sides of the cover assembly (12), and the first sealing element (13) protrudes at least from a part of the engagement portion (111) on one of the opposite sides of the cover assembly (12).

4. The battery (1) according to claim 1, wherein a pressure relief groove (121) is disposed in the cover assembly (12), the pressure relief groove (121) has an annular shape, and a diameter D of the pressure relief groove (121) and a diameter D1 of the cover assembly (12) satisfy: 0.5D1<D<D1.

5. The battery (1) according to claim 2, further comprising a protective layer disposed at least on a side of the cover assembly (12) facing the housing (11), wherein a thickness of the protective layer is greater than or equal to 0.5 microns and less than or equal to 10 microns.

6. The battery (1) according to any one of claims 1 to 5, further comprising a battery cell assembly (30) disposed in the housing (11) and an insulating adhesive tape (40) disposed between a side surface of the battery cell assembly (30) and a side wall of the housing (11), wherein the insulating adhesive tape (40) has a folded zone at a side of the battery cell assembly (30) facing an end of the housing (11).

7. The battery (1) according to claim 6, further comprising a terminal assembly (20) that is connected to and electrically insulated from an end of the housing (11) remote from the cover assembly (12), wherein the battery cell assembly (30) comprises a positive current collector (31) electrically connected to the terminal assembly (20), the insulating adhesive tape (40) is disposed between a side surface of the positive current collector (31) and the side wall of the housing (11), and the folded zone is formed at a side of the positive current collector (31) facing the terminal assembly (20).

8. The battery (1) according to any one of claims 1 to 5, further comprising a battery cell assembly (30) disposed in the housing (11) and a first insulating element (50) disposed in the housing (11) and on a side of the battery cell assembly (30) facing an end of the housing (11), wherein one or more notches (506) are disposed on a side surface of the first insulating element (50) and extend through the first insulating element (50) in a thickness direction of the first insulating element (50).

9. The battery (1) according to claim 8, wherein a plurality of the notches (506) are disposed on the side surface of the first insulating element (50) in a circumferential direction of the first insulating element (50).

10. The battery (1) according to claim 9, wherein the plurality of the notches (506) are equally spaced in the circumferential direction of the first insulating element (50).

11. The battery (1) according to claim 8, wherein an acute angle or a right angle is formed between a side wall of each of the one or more notches and a bottom surface thereof.

12. The battery (1) according to any one of claims 1 to 5, further comprising a terminal assembly (20) connected to an end of the housing (11) remote from the cover assembly (12), wherein a first through-hole (211) is formed in the terminal assembly (20).

13. The battery (1) according to claim 12, wherein a first groove (212) is formed in a side of the terminal assembly (20) remote from the housing (11), and the first through-hole (211) is provided at a bottom of the first groove (212).

14. The battery (1) according to claim 13, further comprising a battery cell assembly (30) disposed in the housing (11) and connected to the terminal assembly (20), wherein a first welding zone (213) is formed at the bottom of the first groove (212) for welding to the battery cell assembly (30), and the first welding zone (213) is disposed around the first through-hole (211).

15. The battery (1) according to claim 13, wherein the terminal assembly (20) comprises a post terminal (21) connected to the end of the housing (11) remote from the cover assembly (12) and a second sealing element (24), the first groove (212) is provided in the post terminal (21), the second sealing element (24) is disposed in the first groove (212) and seals the first through-hole (211), and one or more abutment portions (241) are disposed on a side of the second sealing element (24) facing the first through-hole (211) and protrude from the second sealing element (24) toward the first through-hole (211) to abut against the bottom of the first groove (212).

16. A battery (1) comprising:
a housing (11);
a terminal assembly (20) disposed in the housing (11);
a jelly roll (33) disposed in the housing (11); and
a current collector (35) disposed in the housing (11) and comprising a protrusion (351) and a plate body (352) surrounding the protrusion (351), wherein the protrusion (351) protrudes from the plate body (352) in an axial direction of the battery (1) and is connected to the terminal assembly (20), and a side of the plate body (352) remote from the terminal assembly (20) is connected to the jelly roll (33);
wherein in the axial direction of the battery (1), the protrusion (351) has a height of M₁, and the plate body (352) has a thickness of M₂, satisfying: M₁≤2M₂.

17. The battery (1) according to claim 16, further comprising an insulating adhesive tape (40) for insulating between the plate body (352) and an inner side wall of the housing (11).

18. The battery (1) according to claim 17, wherein the insulating adhesive tape (40) has a thickness of M₃, satisfying M₃≤M₁≤2(M₂+M₃).

19. The battery (1) according to claim 16, wherein a third through-hole (353) is formed in the protrusion (351), a first groove (212) is formed in the terminal assembly (20), and the third through-hole (353) and the first groove (212) are oppositely disposed and in communication with each other; wherein the third through-hole (353) has a hole diameter of M₄, and the first groove (212) has a hole diameter of M₅, satisfying M₄≥M₅.

20. The battery (1) according to any one of claims 16 to 19, wherein the terminal assembly (20) comprises a pressing ring (25) and a post terminal (21), the post terminal (21) is connected to the protrusion (351), the pressing ring (25) is provided on an outer periphery of the post terminal (21), and the first groove (212) is provided in the post terminal (21), wherein the protrusion (351) has a maximum outer diameter of M₆, the first groove (212) has an inner diameter of M₇ at one side close to the collector (35), and the pressing ring (25) has a maximum outer diameter of M₈, satisfying M₈≥M₆≥M₇.

21. The battery (1) according to claim 16, wherein a surface area of the plate body (352) is M₁₁, and an area of an end surface (331) of the jelly roll (33) in a radial direction is M₁₂, satisfying M₁₁≥70%M₁₂.

22. The battery (1) according to claim 17, wherein the jelly roll (33) comprises two oppositely disposed end surfaces (331) and a side surface (332) connecting the end surfaces (331), one end of the insulating adhesive tape (40) is attached to the side surface (332) of the jelly roll (33), and another end of the insulating adhesive tape (40) is adhered to a side of the plate body (352) remote from the jelly roll (33).

23. The battery (1) according to claim 22, wherein a low passage (34) is formed by the insulating adhesive tape (40) at a transition region between the jelly roll (33) and the plate body (352) to pass through an electrolyte; wherein a width of the flow passage (34) in a radial direction of the jelly roll (33) is M₁₃, satisfying M₁₃≤40%M₁₀.

24. The battery (1) according to claim 22, wherein a height of the jelly roll (33) is M₁₄ and a height of the insulating adhesive tape (40) adhered to the side surface (332) of the jelly roll (33) in the axial direction of the jelly roll (33) is M₁₅, satisfying M₁₄>M₁₅>3mm.

25. The battery (1) according to claim 22, wherein the insulating adhesive tape (40) is arranged in a circumferential direction of the jelly roll (33), and both ends of the insulating adhesive tape (40) extend in the circumferential direction of the jelly roll (33) and are overlapped to form an overlapped area, whereina width of the overlapped area in the circumferential direction of the jelly roll (33) is M₁₆, satisfying 20%M₉>M₁₆>1 mm.

26. The battery (1) according to claim 22, wherein a width of the insulating adhesive tape (40) adhered to the plate body (352) in a radial direction of the plate body (352) is M₁₆, satisfying 20%M₉>M₁₆>1.5 mm.

27. The battery (1) according to claim 22, wherein the insulating adhesive tape (40) comprises a first region (401) connected to a side of the plate body (352) remote from the jelly roll (33) and a second region (402) connected to the side surface (332) of the jelly roll (33), wherein the first region (401) has a maximum diameter of M₁₆ and the second region (402) has a maximum diameter of M₁₇, satisfying 50%M₁₇≤M₁₆≤95%M₁₇.

28. The battery (1) according to claim 27, wherein a distance between a bottom surface of the insulating adhesive tape (40) remote from the plate body (352) and a bottom surface of the second region (402) is M₁₇, and a distance between the bottom surface of the insulating adhesive tape (40) remote from the plate body (352) and a bottom surface of the jelly roll (33) remote from the plate body (352) is M₁₈, satisfying 1%M₁₈≤M₁₇≤60%M₁₈.

29. The battery (1) according to claim 27, further comprising a first insulating element (50) provided on a side of the plate body (352) remote from the jelly roll (33) for achieving insulation between the plate body (352) and the housing (11), wherein a diameter of the first insulating element (50) is M₁₉, and a thickness of the insulating adhesive tape (40) of the second region (402) in a radial direction of the jelly roll (33) is M₂₀, satisfying M₁₉>M₁₀+2M₂₀.

30. A battery (1) comprising:
a housing (11);
a current collector (35) disposed in the housing (11); and
a first insulating element (50) connected between the current collector (35) and the housing (11) in an axial direction of the battery (1), wherein a third groove (501) is disposed in a side of the first insulating element (50) facing the current collector (35);
wherein a volume of the third groove (501) is M₂₁, a maximum thickness of the first insulating element (50) is M₂₂, and a bottom area of the first insulating element (50) is M₂₃, satisfying M₂₁≥10%×M₂₂×M₂₃.

31. The battery (1) according to claim 30, wherein a depth of the third groove (501) is M₂₄ and a distance between a bottom wall of the third groove (501) and a side of the first insulating element (50) remote from the current collector (35) is M₂₅, satisfying M₂₅=M₂₂ - M₂₄, and 0.3 mm≤M₂₅≤80%M₂₂.

32. The battery (1) according to claim 30 or 31, wherein an inner ring reinforcing rib (502) and an outer ring reinforcing rib (503) are provided on a side of the first insulating element (50) facing the current collector (35), the inner ring reinforcing rib (502) and the outer ring reinforcing rib (503) are provided at intervals, the third groove (501) is located between the inner ring reinforcing rib (502) and the outer ring reinforcing rib (503), and the inner ring reinforcing ribs (502) and the outer ring reinforcing ribs (503) are connected through connection reinforcing ribs (504).

33. The battery (1) according to claim 32, wherein the outer ring reinforcing rib (503) is sleeved on an outer periphery of the inner ring reinforcing rib (502), a space between the inner ring reinforcing rib (502) and the outer ring reinforcing rib (503) is M₂₆, and a maximum outer diameter of the first insulating element (50) is M₂₇, satisfying 30%M₂₇≤M₂₆≤70%M₂₇.

34. The battery (1) according to claim 32, wherein in an axial direction of the first insulating element (50), a thickness of each of the inner ring reinforcing rib (502), the outer ring reinforcing rib (503) and the connection reinforcing ribs (504) is M₂₈, satisfying M₂₂≥M₂₈≥0.5M₂₅.

35. The battery (1) according to claim 30, wherein a transition slope (505) is disposed on a circumferential outer edge of the first insulating element (50) and gradually inclined from a side of the first insulating element (50) remote from the current collector (35) to a side of the first insulating element (50) close to the current collector (35) and toward the housing (11), and in an axial direction of the first insulating element (50), an outer side of the transition slope (505) is provided in an arc shape, and a radius of the transition slope (505) is M₂₆, satisfying M₂₂≥M₂₆≥0.5M₂₂.

36. The battery (1) according to claim 35, wherein in the axial direction of the first insulating element (50), the transition slope (505) has a height of M₂₇ and a width of M₂₈, satisfying M₂₂≥M₂₇≥0.5M₂₂, and 4 mm≥M₂₈≥0.3 mm.

37. The battery (1) according to claim 30, wherein one or more notch (506) are disposed on an outer periphery of the first insulating element (50), and an arc length of each of the one or more the notches (506) at a side close to the current collector (35) is M₂₉, satisfying 0.1 mm≤M₂₉≤10 mm.

38. A battery (1) comprising:
a housing (11) having an accommodating chamber;
a jelly roll (33) disposed in the accommodating chamber; and
a current collector (35) disposed in the accommodating chamber and welded to the jelly roll (33), wherein the jelly roll (33) comprises an end surface facing the current collector (35), and a welding area formed between the end surface and the current collector (35) occupies 10% to 90% of an area of the end surface.

39. The battery (1) according to claim 38, wherein the current collector (35) has a plurality of second welding zones (36) disposed around a center of the current collector (35), and a plurality of welding lines (360) are disposed on a side of each of the second welding zones (36) facing the jelly roll (33); wherein the current collector (35) has a radius length R and at least one of the welding lines (360) has a length greater than or equal to 0.05R.

40. The battery (1) according to claim 39, wherein each of the welding lines (360) comprises at least one kinked portion (361) each having a first connection segment (3611) and a second connection segment (3612) interconnected, and an included angle between the first connection segment (3611) and the second connection segment (3612) is greater than or equal to 0° and less than 180°.

41. The battery (1) according to claim 40, wherein each of the welding lines (360) comprises a plurality of kinked portions (361) connected in sequence, one end of the first connection segment (3611) and one end of the second connection segment (3612) in each of the plurality of kinked portions (361) are connected to each other to form an end point, another end of the first connection segment (3611) and another end of the second connection segment (3612) are spaced apart and located on a same straight line, and a distance between the end point and the straight line is greater than or equal to 0.5 mm.

42. The battery (1) according to claim 39, wherein the current collector (35) further comprises a central portion (300) and a plurality of connection elements (311) connected to the central portion (300) and extending in a radial direction of the current collector (35), the plurality of connection elements (311) are arranged at intervals to define a plurality of second welding zones (36) by any two adjacent connection elements (311), a first gap (321) is formed between each of the second welding zones (36) and the central portion (300), a second gap (322) is formed between each of the second welding zones (36) and adjacent one of the connection elements (311), and the first gap (321) is in communication with the second gap (322).

43. The battery (1) according to claim 39, wherein a length of one of the welding lines (360) located in a middle of each of the second welding zones (36) is greater than a length of another one of the welding lines (360) located on both sides of each of the second welding zones (36); wherein the one of the welding lines (360) located in the middle has a first length, the another one of the welding lines (360) located on both sides has a second length, and a difference between the first length and the second length is greater than or equal to 0.1 mm.

44. A battery pack comprising the battery (1) according to any one of claims 1 to 43.

45. A housing (11) applied to a battery (1), comprising:
a main body portion (112); and
a support portion (1112) connected to the main body portion (112), recessed in a first direction toward an interior of the housing (11), and comprising two opposite side walls in a second direction, the second direction being perpendicular to the first direction;
wherein the housing (11) satisfies: 0<M9≤0.05*H, E1 is a minimum spacing between the two opposite side walls, and H is a height of the battery (1).

46. The housing (11) according to claim 45, wherein a chamfer is disposed at a first connection of the support portion (1112) with the main body portion (112) and provided in a rounded corner, and the housing (11) satisfies: M2≥1.5*M5, M2 is an arc length of the chamfer at the first connection, and M5 is a thickness of the main body portion (112).

47. The housing (11) according to claim 45, wherein the housing (11) further comprises a clamping portion (111) connected to the support portion (1112) and buckling a cover assembly toward the support portion (1112); a chamfer is disposed at a second connection of the support portion (1112) with the clamping portion (111) and provided in a rounded corner, and the housing (11) satisfies: M3≥1.2*M5, M3 is an arc length of the chamfer at the second connection, and M5 is a thickness of the main body portion (112).

48. The housing (11) according to claim 45, wherein the housing (11) satisfies: 20°≤M1≤90°, and M₁ is an included angle between the support portion (1112) and the main body portion (112).

49. The housing (11) according to claim 45, wherein the housing (11) satisfies: M10≥0.5*M5; M10 is a thickness of the support portion (1112), and M5 is a thickness of the main body portion (112).

50. The housing (11) according to claim 45, wherein the main body portion (112) comprises a main body base portion (1121), a curved portion (1122), and a holding portion (1123), the base portion (1121) is connected to the holding portion (1123) through the curved portion (1122); a thickness of the curved portion (1122) is gradually increased in a direction from one end of the curved portion (1122) connected to the base portion (1121) to another end of the curved portion (1122) connected to the holding portion (1123); and
the housing (11) satisfies: F9≥0.8*F8, wherein F9 is a dimension of an outer rounded corner of the curved portion (1122) in a height direction of the battery (1), and F8 is a thickness of the holding portion (1123).

51. The housing (11) according to any one of claims 45 to 50, wherein the housing (11) comprises a flared segment (1125) that is provided before being recessed and is recessed to form the support portion (1112); the flared segment (1125) has a gradually enlarged inner diameter in a direction from the main body portion (112) toward the support portion (1112); and the housing (11) satisfies: F1≥1 mm, wherein F1 is a dimension of the flared segment (1125) in the height direction of the battery (1).

52. The housing (11) according to claim 51, wherein the housing (11) further comprises a first constant-diameter segment (1126) that is provided before being recessed and connected to the flared segment (1125), and the first constant-diameter segment (1126) is used to form the main body portion (112); and
the housing (11) satisfies F5≤20°, whereinF5 is an included angle between an extension direction of the flared segment (1125) and an extension direction of the first constant-diameter segment (1126).

53. The housing (11) according to claim 45 or 46, wherein the housing (11) further comprises a clamping portion (111) connected to the support portion (1112) and buckling a cover assembly toward the support portion (1112), the housing (11) comprises a first constant-diameter segment (1126), a flared segment (1125) and a second constant-diameter segment (1127) that are provided before being recessed and connected in sequence; the first constant-diameter segment (1126) is configured to form the main body portion (112), the flared segment (1125) is recessed to form the support portion (1112), and the second constant-diameter segment (1127) is bent to form the clamping portion (111).

54. The housing (11) according to claim 53, wherein the housing (11) satisfies: F3/F4≥0.8, wherein F3 is an inner diameter of the first constant-diameter segment (1126) and F4 is an inner diameter of the second constant-diameter segment (1127).

55. The housing (11) according to claim 53, wherein a tangent surface is formed at an end of the second constant-diameter segment (1127) remote from the flared segment (1125), and the housing (11) satisfies: 30%≤F12/F10≤90%, wherein F12 is a dimension, in a thickness direction of the second constant-diameter segment (1127), of an orthographic projection of the tangent surface formed in the thickness direction, and F10 is a thickness of the second constant-diameter segment (1127).

56. The housing (11) according to claim 53, wherein the housing (11) satisfies: F1/F2≥0.5, wherein F1 is a dimension of the flared segment (1125) in a height direction of the battery (1), and F2 is a dimension of the second constant-diameter segment (1127) in the height direction of the battery (1).

57. A housing assembly (10) comprising:
the housing (11) according to any one of claims 45 to 56,
a cover assembly (12), and
a first sealing element (13), wherein at least a portion of the first sealing element (13) is adaptively connected between the cover assembly (12) and the support portion (1112).

58. The housing assembly (10) according to claim 57, wherein the housing assembly (10) satisfies: 0.1mm≤E7-E8≤5mm, wherein E7 is an inner diameter of a contact surface between the first sealing element (13) and the cover assembly (12), and E8 is an inner diameter of an orthographic projection of the support portion (1112) of the housing (11) on the cover assembly (12).

59. A housing assembly (10), comprising:
a housing (11) having a first opening (113) formed at one end thereof;
a cover assembly (12) connected to the housing (11) and sealing the first opening (113); and
a first sealing element (13) disposed between the cover assembly (12) and the housing (11), wherein the first sealing element (13) wraps a side surface of the cover assembly (12) and forms a sealed connection to the cover assembly (12) and the housing (11), the first sealing element (13) comprises a first sealing portion (131) buckled between the housing (11) and opposite sides of the cover assembly (12), and a second sealing portion (132) protruding from the housing (11), and a thickness T1 of the first sealing portion (131) and a thickness T2 of the second sealing portion (132) satisfy: 0.1≤T1/T2≤0.8.

60. The housing assembly (10) according to claim 59, wherein the first sealing element (13) further comprises a third sealing portion (133) buckled between the housing (11) and a side surface of the cover assembly (12), a gap is formed between the third sealing portion (133) and the side surface of the cover assembly (12), and a thickness T3 of the third sealing portion (133) and the thickness T2 of the second sealing portion (132) satisfy: 1≤T3/T2≤1.5.

61. The housing assembly (10) according to claim 59, wherein the housing (11) comprises a clamping portion (1111) buckled to a side of the cover assembly (12) remote from another end of the housing (11), and a minimum value T4 of a height difference between a side of the clamping portion (1111) remote from the cover assembly (12) and a side of the cover assembly (12) remote from another end of the housing (11) is less than or equal to 1 mm.

62. The housing assembly (10) according to claim 61, wherein the housing (11) further comprises a main body portion (112), and a support portion (1112) buckled on a side of the cover assembly (12) facing the another end of the housing (11) and connected to the main body portion (112); and an absolute value of a height difference T5 between the lowest point of the support portion (1112) in a thickness direction of the cover assembly (12) and a connection of the support portion (1112) with the main body portion (112) is less than or equal to 5 mm.

63. The housing assembly (10) according to claim 62, wherein an outer diameter T6 of the main body portion (112) and an inner diameter T7 of the support portion (1112) satisfy: 0.3 mm≤T6-T7≤10 mm.

64. The housing assembly (10) according to claim 62, wherein a portion of the support portion (1112) abutting the first sealing element (13) is partially overlapped an orthographic projection of the cover assembly (12) in an axial direction of the housing (11), and a width of the overlapped portion in a radial direction of the housing (11) is greater than or equal to 0.2 mm.

65. The housing assembly (10) according to claim 61, wherein a width T8 of the clamping portion (1111) in a radial direction of the housing (11) and a diameter T9 of the cover assembly (12) satisfy: T8≥0.03T9.

66. A housing assembly(10), comprising:
a housing (11) for receiving a battery cell assembly (30); and
a cover assembly (12) connected to one end of the housing (11); wherein the cover assembly (12) comprises a first convex portion (123) protruding in a direction remote from the housing (11), and a concave portion (124) recessed in a direction close to the housing (11) and abutted against the battery cell assembly (30); and a first air chamber (14) is formed by the first convex portion (123), the concave portion (124), the housing (11), and the battery cell assembly (30).

67. The housing assembly (10) according to claim 66, wherein the first convex portion (123) and the concave portion (124) are provided in an annular shape, the concave portion (124) is located in an area enclosed by the first convex portion (123), and a pressure relief groove (121) is provided in the first convex portion (123).

68. The housing assembly (10) according to claim 67, wherein the pressure relief groove (121) extends in an annular shape in a circumferential direction of the first convex portion, and a width of a bottom of the pressure relief groove (121) is greater than or equal to 0.02 mm and less than or equal to 0.8 mm.

69. The housing assembly (10) according to claim 67, wherein an included angle β formed between a side wall of the pressure relief groove (121) and a bottom of the pressure relief groove (121) satisfies : 95°≤β≤165°.

70. The housing assembly (10) according to claim 66, wherein the cover assembly (12) further comprises a second convex portion (125) protruding in a direction remote from the housing (11) and disposed in an area enclosed by the concave portion (124), and a second air chamber (15) is formed by the second convex portion (125), the concave portion (124) and the battery cell assembly (30).

71. The housing assembly (10) according to claim 70, wherein a second through-hole (1251) is formed in the second convex portion (125) and extends through the second convex portion (125) in a thickness direction of the second convex portion (125).

72. The housing assembly (10) according to claim 70, wherein a protrusion height of the second convex portion (125) is less than a protrusion height of the first convex portion (123), and a difference between the protrusion height of the second convex portion (125) and the protrusion height of the first convex portion (123) is greater than or equal to 0.3 mm and less than or equal to 1 mm.

73. The housing assembly (10) according to claim 71, wherein a diameter P1 of the second through-hole (1251) and a diameter P2 of the second convex portion (125) satisfy: 1 mm<P1<0.8P2.

74. The housing assembly (10) according to claim 71, wherein a side wall of the second through-hole (1251) is inclined at least partially in a direction remote from an axis of the second through-hole (1251) at an inclination angle α≤70° in a protrusion direction of the second convex portion (125).

75. The housing assembly (10) according to claim 71, further comprising a third sealing element(126) connected to the second convex portion (125) and sealing the second through-hole (1251), wherein the third sealing element includes a transition portion (1261) that is recessed toward the housing (11) and extends into the second through-hole (1251), and a diameter P3 of the transition portion (1261) and a diameter P1 of the second through-hole (1251) satisfy: 0.2P1≤P3≤P1.
